(19) Europäisches Patentamt
European Patent Office
Office européen des brevets

(11) **EP 4 322 527 A1**

(12) **EUROPEAN PATENT APPLICATION**
published in accordance with Art. 153(4) EPC

(43) Date of publication:
**14.02.2024 Bulletin 2024/07**

(21) Application number: **21936486.6**

(22) Date of filing: **16.04.2021**

(51) International Patent Classification (IPC):
***H04N 19/103*** *(2014.01)* ***H04N 19/147*** *(2014.01)*

(52) Cooperative Patent Classification (CPC):
**H04N 19/103; H04N 19/147**

(86) International application number:
**PCT/CN2021/087918**

(87) International publication number:
**WO 2022/217611 (20.10.2022 Gazette 2022/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
- **YUAN, Hui**
  **Dongguan, Guangdong 523860 (CN)**
- **WANG, Lu**
  **Dongguan, Guangdong 523860 (CN)**
- **LI, Ming**
  **Dongguan, Guangdong 523860 (CN)**
- **WANG, Xiaohui**
  **Dongguan, Guangdong 523860 (CN)**

(74) Representative: **Taor, Simon Edward William et al**
**Venner Shipley LLP**
**200 Aldersgate**
**London EC1A 4HD (GB)**

# (54) CODING AND DECODING METHODS, RELATED DEVICES AND STORAGE MEDIUM

(57) Coding and decoding methods, related devices and a storage medium. One coding method comprises: determining a neighbor point of the current point in a point cloud to be coded, and calculating a first parameter according to the neighbor point, wherein the first parameter is the difference between the greatest value and the smallest value among reconstructed values of a first attribute of the neighbor point; when the first parameter is less than a threshold value, determining a predicted value of the first attribute of the current point by using a preset first prediction mode; calculating the difference between an original value and the predicted value of the first attribute of the current point, and taking the difference as a residual value of the first attribute of the current point; and coding a quantized residual value.

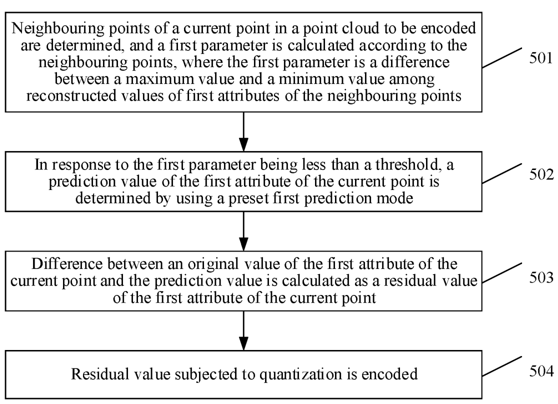


FIG. 5

EP 4 322 527 A1

## Description

### TECHNICAL FIELD

Embodiment of the present disclosure relates to, but is not limited to, the encoding and decoding technology, and in particular to encoding and decoding methods, related devices and a storage medium.

### BACKGROUND

Three-dimensional (3D) point cloud data has been widely used in various fields, such as virtual reality or augmented reality, robots, geographic information systems, medical field and so on. With the development of 3D point cloud data and continuous improvement of a reference degree and a speed of a device for scanning 3D point cloud data (such as a laser radar, a Kinect somatosensory camera, etc.), people may accurately acquire a large amount of the point cloud data from surfaces of an object. Generally, point cloud data in a scene may include hundreds of thousands of points. Such a huge amount of point cloud data also brings challenges to the storage and transmission for computers.

Point cloud compression mainly includes geometry compression and attribute compression. For the attribute compression, as described in the Test Model for Category 1&3 (TMC13) provided by the Moving Picture Experts Group (MGEP) of the International Organization for Standardization (ISO), an attribute compression framework of a point cloud includes a lifting transform strategy based on Levels of Detail (LOD) and a predictive transform strategy based on the LOD. There is also a method for point cloud attribute compression described in the Point Cloud Exploration Model (PCEM) that is a test platform provided by the Audio Video encoding Standard (AVS) point cloud compression working group, and so on.

However, there is still much space for improvement in the schemes for point cloud attribute compression.

### SUMMARY

The following is a summary of the subject matter described in detail in the present disclosure. This summary is not intended to limit the scope of protection of the claims.

In a first aspect, embodiments of the present disclosure provide an encoding method including following four operations.

Neighbouring points of a current point in a point cloud to be encoded are determined, and a first parameter is calculated according to the neighbouring points. The first parameter is a difference between a maximum value and a minimum value among reconstructed values of first attributes of the neighbouring points.

In response to the first parameter being less than a threshold, a prediction value of the first attribute of the current point is determined by using a preset first prediction mode.

A difference between an original value of the first attribute of the current point and the prediction value is calculated as a residual value of the first attribute of the current point.

The residual value subjected to quantization is encoded.

In a second aspect, embodiments of the present disclosure provide a decoding method including following four operations.

Neighbouring points of a current point in a point cloud to be decoded are determined, and a first parameter is calculated according to the neighbouring points. The first parameter is a difference between a maximum value and a minimum value among reconstructed values of first attributes of the neighbouring points.

In response to the first parameter being less than a threshold, a prediction value of the first attribute of the current point is determined by using a preset first prediction mode.

A bitstream is parsed to obtain a residual value of the first attribute of the current point.

A sum of a residual value subjected to dequantization and the prediction value is calculated as a reconstructed value of the first attribute of the current point.

In a third aspect, embodiments of the present disclosure also provide another encoding method.

The encoding method includes following five operations.

Neighbouring points of a current point in a point cloud to be encoded are determined, and a first parameter is calculated according to the neighbouring points. The first parameter is a difference between a maximum value and a minimum value among reconstructed values of first attributes of the neighbouring points.

In response to the first parameter being less than a threshold, a prediction value of the first attribute of the current point is determined by using a preset first prediction mode.

A difference between an original value of the first attribute of the current point and the prediction value is calculated as a residual value of the first attribute of the current point.

The residual value subjected to quantization is encoded.

Identification information of the first prediction mode is signalled, where the identification information is used for indicating a prediction mode.

In a fourth aspect, embodiments of the present disclosure also provide another decoding method including following four operations.

A bitstream is parsed to obtain identification information of a prediction mode of a current point in a point cloud to be decoded.

A prediction value of a first attribute of the current point is determined by using the prediction mode indicated by the identification information.

The bitstream is parsed to obtain a residual value of the first attribute of the current point.

A sum of a residual value subjected to dequantization and the prediction value is calculated as a reconstructed value of the first attribute of the current point.

Other aspects may be understood after the drawings and detailed description are read and understood.

BRIEF DESCRIPTION OF THE DRAWINGS

The accompanying drawings are used for providing an understanding of the embodiments of the present disclosure, and constitute a part of the specification. The accompanying drawings serve to explain schemes of the present disclosure together with the embodiments of the present disclosure, and do not constitute a limitation to the schemes of the present disclosure.

FIG. 1 is a flowchart of point cloud encoding.

FIG. 2 is a flowchart of point cloud decoding.

FIG. 3 is a schematic diagram of a process of generating LOD.

FIG. 4 is a schematic diagram of another process of generating LOD.

FIG. 5 is a flowchart of an encoding method according to an embodiment of the present disclosure.

FIG. 6 is a flowchart of an encoding method according to an exemplary embodiment of the present disclosure.

FIG. 7 is a flowchart of a decoding method according to an embodiment of the present disclosure.

FIG. 8 is a flowchart of a decoding method according to an exemplary embodiment of the present disclosure.

FIG. 9 is a flowchart of an encoding method according to an embodiment of the present disclosure.

FIG. 10 is a flowchart of an encoding method according to an exemplary embodiment of the present disclosure.

FIG. 11 is a flowchart of a decoding method according to an embodiment of the present disclosure.

FIG. 12 is a schematic diagram of a framework of an encoder according to an embodiment of the present disclosure.

FIG. 13 is a schematic diagram of a processing flow of an example encoder according to the present disclosure.

FIG. 14 is a schematic diagram of a framework of a decoder according to an embodiment of the present disclosure.

FIG. 15 is a schematic diagram of a processing flow of an example decoder according to the present disclosure.

FIG. 16 is a schematic diagram of a framework of an encoding device.

DETAILED DESCRIPTION

Multiple embodiments are described in the present disclosure, but the description is exemplary and not limiting and more embodiments and implementations may be included in a scope of the embodiments described in the present disclosure.

In this disclosure, the words "exemplary" or "for example" are used as examples, illustrations, or descriptions.

Any embodiment described in the present disclosure as "exemplary" or "for example" should not be construed as being more preferred or advantageous than other embodiments.

When representative embodiments are described, the specification may have presented the method and/or process as a particular sequence of steps. However, to the extent that the method or process does not depend on the particular order of the steps described herein, the method or process should not be limited to the particular order of steps. As will be appreciated by those of ordinary skill in the art, other sequences of steps are also possible. Accordingly the particular sequence of steps set forth in the specification should not be construed as limiting the claims. Furthermore, the claims for the method and/or process should not be limited to perform the steps of the method and/or process in the sequence disclosed in the specification, which can be readily appreciated by those skilled in the art that the sequence can change and the changed sequence remain within the spirit and scope of the disclosed embodiments.

FIG. 1 is a schematic diagram of a framework of point cloud encoding. The framework of the point cloud encoding shown in FIG. 1 can be applied to a point cloud encoder. Geometry information and attribute information of each point in the point cloud to be encoded are encoded separately. In a process of geometry encoding, coordinate transform is performed on the geometry information, so that the point cloud is completely contained in a bounding box, and then quantization is performed. The operation of quantization mainly plays a role of scaling. Since the quantization and rounding causes geometry information of a part of the point cloud to be identical, it is determined, based on parameters, whether to remove duplicated points. The process of the quantization and removing the duplicated points is also called a voxelization process. Then octree partitioning is performed on the bounding box. In a process of octree-based geometry information encoding, the bounding box is equally partitioned into eight subcubes, and a non-empty sub-cube (including points in the point cloud) is further equally partitioned into eight parts until the partitioned leaf nodes are unit cubes each with a size of $1\times1\times1$, and arithmetic coding is performed on points in the leaf nodes to generate a binary geometry bitstream. In a process of triangle soup (trisoup)-based geometry information encoding, the octree partitioning is also performed firstly, but different from the octree-based geometry information encoding, the trisoup-based geometry information encoding does not need to progressively partition the point cloud into unit cubes each with the size of $1\times1\times1$, but stops the partitioning when an edge length of a block (subblock) is W; based on a surface formed by distribution of the point cloud in each block, at most twelve vertexes generated by the surface and twelve edges of the block are obtained, and the arithmetic coding is performed on the vertexes (i.e., a surface fitting is performed based on the vertexes) to generate the binary geometry bitstream. The vertexes are also used for implementation of geometry reconstruction, and reconstructed geometry information is used in the attribute encoding of the point cloud.

In the process of attribute encoding, the geometry encoding is completed. After geometry information is reconstructed, colour conversion is performed, and colour information (i.e., a kind of attribute information) is converted from the RGB colour space to the YUV colour space. Then, the point cloud is re-shaded by using the reconstructed geometry information, so that un-coded attribute information corresponds to the reconstructed geometry information. The attribute encoding is mainly performed for the colour information. A process of colour information encoding includes three transform methods: a first method of a distance-based predictive transform depending on the LOD partitioning, a second method of a distance-based lifting transform also depending on the LOD partitioning, and a third method of a transform that directly performs a region adaptive hierarchical transform (RAHT). In the second and third methods, the colour information will be converted from a spatial domain to a frequency domain, high frequency coefficients and low frequency coefficients will be obtained through the transform, and then the coefficients are quantized (i.e., quantizing the coefficients). Finally, the arithmetic coding is performed on quantized coefficients to generate the binary attribute bitstream, i.e., the attribute bitstream.

FIG. 2 is a schematic diagram of a framework of point cloud decoding. The framework of the point cloud decoding shown in FIG. 2 may be applied to a point cloud decoder. For the acquired binary bitstream, firstly, geometry bitstream and attribute bitstream in the binary bitstream are decoded separately. When the geometry bitstream is decoded, the geometry information of the point cloud is obtained by arithmetic decoding, octree synthesis, surface fitting, geometry reconstruction, and inverse coordinate transform. When the attribute bitstream is decoded, the attribute information of the point cloud is obtained by arithmetic decoding, dequantization, LOD-based predictive transform or LOD-based inverse lifting transform or inverse RAHT, and inverse colour conversion. A 3D picture model of the point cloud data to be encoded is restored based on the geometry information and the attribute information.

In the framework of the point cloud encoding shown in FIG. 1 above, the LOD partitioning is mainly used for the predictive transform and the lifting transform in the point cloud attribute transform. The distance-based LOD partitioning will be introduced in detail below. As an example, the LOD partitioning partitions an inputted point cloud into different refinement levels (denoted by $R_l$, where $l = 0,1,...,N-1$ ) by a set of distance thresholds (denoted by $d_l$ , where $l = 0,1,..., N-1$ ), i.e., points in the point cloud are partitioned into different sets $R_l$. The distance thresholds may be custom values. The distance thresholds need to satisfy two conditions: $d_l < d_{l-1}$ and $d_{l-1} = 0$ . In an example, the process of the LOD partitioning is performed after the geometry reconstruction of the point cloud, at this time, the geometric coordinate information of the point cloud may be obtained directly. The process of the LOD partitioning may be applied to both the point cloud encoder and the point cloud decoder simultaneously, and a process of generating the LOD include following four operations.

(1) All points in the point cloud are putted into a point set named as "unaccessed", and a point set named as "accessed" (represented by V) is initialized as an empty set.

(2) The LOD layer is partitioned by continuous iteration, and a process of generating the LOD with the refinement level corresponding to the first iteration includes following a to e.

a. all points in the point cloud are traversed through the iteration.

b. if the current point has been traversed, the point is ignored.

c. otherwise, a distance from the point to each point in the set V is calculated, and a minimum distance is recorded as D.

d. if the distance D is greater than or equal to a threshold, the point corresponding to the distance D is added into the refinement level $R_0$ and the set V.

e. the process from a to d are repeated until at least one point in the point cloud is traversed.

(3) The $l$-th LOD set, i.e., *LODl*, is obtained by merging the points in the refinement levels $R_0$ , $R_1$,... $R_l$.

(4) The process from (1) to (3) are repeated to continuously iterate until all LOD layers are generated or all points are traversed.

FIG. 3 is a schematic diagram of a process of generating the LOD. As shown in FIG. 3, the point cloud includes 10 points: P0, P1, P2, P3, P4, P5, P6, P7, P8 and P9, and the LOD partitioning is performed based on the distance threshold. Thus, a set LODO includes P4, P5, P0 and P2 in sequence, a set LOD1 includes P4, P5, P0, P2, P3, P1 and P6 in sequence, and a set LOD2 includes P4, P5, P0, P2, P3, P1, P6, P7, P8 and P9 in sequence.

Compared with the original scheme of the LOD partitioning where all points are traversed and searched, the scheme of the LOD partitioning based on Morton codes can reduce the computational complexity.

The Morton code is also called a z-order code, because its encoding order is in spatial z order. Firstly, the points in the inputted point cloud are represented by variables $P_i$ , and variables $M_i$ are Morton codes associated with $P_i$ , where $i$ = 1, 2, ..., $N$. The process of calculating the Morton code is described as follows. For 3D coordinates in which each component is represented by a d-bit binary number, three coordinate components thereof are represented as:

$$x=\sum_{l=1}^{d}2^{d-l}x_l\ ,\ldots\ y=\sum_{l=1}^{d}2^{d-l}y_l\ ,\ \mathrm{z}=\sum_{l=1}^{d}2^{d-l}\mathrm{z}_l\ .$$

Herein, $x_l, y_l, \mathrm{z}_l \in \{0,1\}$ are binary numbers respectively corresponding to the highest bit ($l$ = 1 ) to the lowest bit ($l = d$ ) of $x$, $y$ and z . In the Morton code $M$, starting from the highest bit of $x$, $y$ and z, $x_l$, $y_l$, $\mathrm{z}_l$ are arranged alternately in turn to the lowest bit. The calculation formula of $M$ is as follows:

$$M=\sum_{l=1}^{d}2^{3(d-l)}(4x_l+2y_l+\mathrm{z}_l)=\sum_{l'=1}^{3d}2^{3d-l'}m_{l'} \qquad (1).$$

Herein, $m_{l'} \in \{0,1\}$ are values of the highest bit ($l'$ = 1) to the lowest bit ($l'$ = 3$d$), respectively. After the Morton code of each point in the point cloud is obtained, the points in the point cloud are arranged according to the Morton codes in an order of small to large.

Furthermore, D0 (an initial distance threshold) and ρ (a distance threshold ratio when adjacent LOD layers are partitioned) are initial parameters, respectively, and ρ>1. It is assumed that I represents indexes of all points, in the k-th iteration, a nearest neighbour for a point in the LODk, i.e., a point having a minimum distance with the point in LODk, will be searched from the LODO layer to the LODk-1 layer, , where k=1, 2,..., N-1. Herein, N is the total number of the LOD layers. Moreover, when k=0, i.e., in the 0-th iteration, a nearest neighbour for a point in LODO will be searched directly in the LODO. Exemplarily, the search procedure includes following four operations.

(1) The partitioning distance threshold is initialized as D0.

(2) In the k-th iteration, L(k) keeps points belonging to the LODk layer, and O(k) keeps a point set with higher refinement level than the LODk layer, where L(k) and O(k) are calculated as follows.

Firstly, O(k) and L(k) are initialized as empty sets.

Secondly, points are traversed according to the order of indexes of the points stored in the I in each iteration. In each traversal, a geometric distance from a current point to each point within a certain range in the set O(k) will be calculated; and based on a Morton code corresponding to the current point in the I, a first point with an index larger than the Morton code corresponding to the current point is searched in the set O(k), and searching is performed within a search range SR1 of the index (herein, SR1 represents a search range based on Morton code, and SR1 may have a value of 8, 16 or 64). If a point whose distance from the current point is less than the threshold is searched out within this range, the current point is added into the set L(k). Otherwise, the current point is added into the set O(k).

(3) In each iteration, the set L(k) and the set O(k) are calculated separately, and the points in set O(k) are used for predicting the points in the set L(k). It is assumed that the set R(k)=L(k) L(k-1). That is to say, R(k) represents a point set constituted of the difference between the set LOD(k-1) and the set LOD(k). For points located in the set R(k), the nearest h (in general, a value of h may be set to be 3) predicted neighbouring points are searched in the set O(k). The process of searching the nearest neighbours is as following a to c.

a. for the point Pi in the set R(k), the Morton code corresponding to the point is Mi.

b. a first point with an index larger than the Morton code Mi corresponding to the current point Pi is searched in the set O(k).

c. the nearest neighbours of the current point Pi are searched within a search range [j-SR2, j+SR2] of the set O(k) based on the index j (herein, SR2 represents a search range and a value of SR2 may be 8, 16, 32, or 64).

(4) The process from (1) to (3) are repeated to continuously iterate until all points in I are traversed.

FIG. 4 is a schematic diagram of another process of generating LOD. As shown in FIG. 4, the point cloud includes 10 points: P0, P1, P2, P3, P4, P5, P6, P7, P8 and P9. The LOD partitioning is performed based on Morton codes. Firstly, the 10 points are arranged according to the ascending order of the Morton codes. The order of these 10 points is P4, P1, P9, P5, P0, P6, P8, P2, P7 and P3. Then the nearest neighbours are searched, so that the set LODO still includes P4, P5, P0, P2 in sequence, the set LOD1 still includes P4, P5, P0, P2, P3, P1 and P6 in sequence, and the set LOD2 still includes P4, P5, P0, P2, P3, P1, P6, P7, P8, P9 in sequence.

For the lifting transform mode, firstly, the LOD is constructed by the point cloud sorted according to Morton codes, i.e., the sorted points are down-sampled according to the preset number of LOD layers, and an LOD layer is formed by the obtained points after each sampling, and the sampling distances have an order from large to small until the whole LOD is completely constructed. Then, for a point in the point cloud, the neighbouring points are searched in the order of LOD layers, and a weighted average of attribute values of all neighbouring points is used as an attribute prediction value. The weight of each neighbouring point of a current point is a reciprocal of a square of a Euclidean distance in geometric coordinates between the current point and the neighbouring point. Finally, an attribute residual value is obtained by subtracting the attribute prediction value from an actual attribute value of the current point.

In an example, for the lifting transform mode, after the LOD is constructed, K-Nearest Neighbour (KNN) algorithm may be used for finding up to K nearest neighbouring points for each point, then there are K+1 prediction modes: using each of the attribute values of the first, second, ... and K nearest neighbouring points as a prediction reference value, and using the weighted average of the attribute values of the K nearest neighbouring points as the prediction reference value. The weight of each nearest neighbouring point of a current point is a reciprocal of a square of a Euclidean distance in geometric coordinates between the current point and the nearest neighbouring point, and then a Rate-distortion optimization (RDO) cost is calculated for the K+1 prediction reference values and their corresponding modes, and an attribute prediction value corresponding the minimum cost is used as the attribute prediction value of the current point.

In an example, the colour prediction technology in the predictive transform mode applied to point cloud colour encoding may be implemented by following two processes.

1. The LOD is generated based on the Euclidean distance of each point, and the 3 nearest neighbours of the current point are obtained based on the order of the LOD, and the 3 nearest neighbours are used as the neighbouring point set of the current point.

2. The colour of the current point is predicted according to colour information of the neighbouring point set, and there are four prediction modes.

In an example, for a prediction mode 0, i.e., predMode=0 (predMode is assigned to a value of 0), the reciprocal of the Euclidean distance between the neighbouring point and current point is used as the weight, and the weighted average is performed on the colours of 3 neighbouring points in the neighbouring point set to obtain the colour prediction value of the current point. For a prediction mode 1, i.e., predMode=1, the colour information of the first neighbouring point (1st nearest point) is directly used as the prediction value. For a prediction mode 2, i.e., predMode=2, the colour information of the second neighbouring point (2nd nearest point) is directly used as the prediction value. For a prediction mode 3, i.e., predMode=3, the colour information of the third neighbouring point (3rd nearest point) is directly used as the prediction value. The prediction modes and the number of bits required to encode each prediction mode (idxBits) are shown in Table 1.

Table 1

| Prediction mode | Prediction value | idxBits |
|---|---|---|
| 0 | average | 1 |
| 1 | 1st nearest point | 2 |
| 2 | 2nd nearest point | 3 |
| 3 | 3rd nearest point | 3 |

After the colour prediction values of the four prediction modes are calculated, the RDO technology may be used for performing a RDO selection on the four prediction modes. The optimal prediction mode is selected to predict the colour information of the current point, and entropy coding is performed on the information of the optimal prediction mode by using the arithmetic encoder.

In an example, when the current point in the point cloud is predicted, multiple predictor candidates are created based on the search result for the neighbouring points when the LOD is generated, i.e., the predMode may have a value of 0-3. As shown in FIG. 3, when the attribute value of P2 is encoded by using the prediction mode, the 3 nearest neighbouring points of P2 (i.e., P0, P5 and P4) are obtained, and an predictor index of the distance-based weighted average of P0, P5 and P4 may be set to be 0, then an predictor index of the attribute value of the nearest neighbouring point P4 is set to be 1, and indexes of the predictors of the attribute values of the next nearest neighbouring points P5 and P0 are set to be 2 and 3, respectively, as shown in Table 2. After the predictor candidates are created, an optimal predictor is selected by using the RDO process, and then the arithmetic coding is performed on the selected predictor index (herein, when the prediction mode of the current point is 0, the encoding is not needed, and when the prediction mode of the current point is 1, 2 or 3 after the RDO selection, the selected predictor index is encoded into the attribute bitstream).

Table 2

| Predictor index | Prediction value |
|---|---|
| 0 | average |
| 1 | P4 (1st nearest point) |
| 2 | P5 (2nd nearest point) |
| 3 | P0 (3rd nearest point) |

In an example, the colour prediction technology in the predictive transform mode applied to point cloud colour encoding can be implemented by the following processes.

The maximum difference maxDiff of the attribute values is calculated for the neighbouring point set of the current point, and the maxDiff is compared with a preset threshold. If the maxDiff is less than the threshold, the prediction mode of using the weighted average of attribute values of the neighbouring points is used. Otherwise, the RDO technology is used for this point to select the optimal prediction mode.

The RDO technology will calculate a cost score for each prediction mode of the current point, and then select the prediction mode with the minimum cost score, i.e., the optimal prediction mode, as the attribute prediction mode of the current point.

For example, based on the four prediction modes shown in Table 1, firstly, the maximum attribute difference maxDiff is calculated for the neighbouring point set of the current point, the process of which is as follows. Firstly, the maximum difference of the red (R) components, i.e., max (R)-min (R), of the neighbouring points is calculated, and similar calculation is also made for the green (G) components and the blue (B) components. Then the maximum difference among the maximum differences of the R, G and B components is selected as maxDiff, i.e., maxDiff=max(max(R1, R2, R3)-min(R1, R2, R3), max(G1, G2, G3)-min(G1, G2, G3), max (B1, B2, B3)-min(B1, B2, B3)). The maxDiff is compared with the threshold, when the maxDiff is less than the threshold, the prediction mode of the current point is set to be 0, i.e., predMode=0. When the maxDiff is greater than or equal to the threshold, the RDO technology is used for the current point to calculate the attribute prediction value attrPred corresponding to each prediction mode. Specifically, subtraction is performed between the attribute value attrValue of the current point and the prediction value attrPred of the current point, and the resulting difference is quantized to obtain quantized residual attrResidualQuant. The distortion D of the RDO technology is a sum of the attrResidualQuants of three components, i.e., D=attrResidualQuant[0] +attrResidualQuant[1]+attrResidualQuant[2]. The number of bits (idxBits) required to encode each prediction mode is calculated as the bit rate R of the RDO technology, i.e., R=idxBits. Then the cost score of each prediction mode can be represented as D+lambda×R, where lambda=0.01×Qstep, and the prediction mode with the minimum cost score is selected as the optimal prediction mode of the current point. Herein, R1 represents the attribute value of the R component of the first neighbouring point; R2 represents the attribute value of the R component of the second neighbouring point; R3 represents the attribute value of the R component of the third neighbouring point; G1 represents the attribute value of the G component of the first neighbouring point; G2 represents the attribute value of the G component of the second neighbouring point; G3 represents the attribute value of the G component of the third neighbouring point; B1 represents the attribute value of the B component of the first neighbouring point; B2 represents the attribute value of the B component of the second neighbouring point; and B3 represents the attribute value of the B component of the third neighbouring point.

In an example, the process of attribute encoding may include: LOD is generated through position information of given inputted point cloud; the point cloud prediction is performed according to the order of the LOD, the residual result (also referred to as the residual value) calculated after the prediction is quantized; and arithmetic coding is performed on the residual value and the prediction mode to generate an attribute bitstream. In an example, the process of attribute decoding may include: the residual values of the attribute information of the points in the point cloud are acquired by parsing the attribute bitstream, and then the prediction modes are acquired; the point cloud prediction is performed to obtain attribute prediction values of the point cloud; dequantization is performed on the residual values of the attribute information of the points to obtain dequantized residual values of attribute information of the points; reconstructed values of the attribute information of the points are obtained by adding the residual values of attribute information of the points with the prediction values, so as to obtain the decoded point cloud.

The attribute encoding includes not only encoding of the colour information, but also encoding of other attribute information, such as reflectance information. In the process of attribute encoding, the colour information and the reflectance information of each point in the point cloud to be encoded are encoded separately. For example, the colour information of the attributes is encoded firstly, a colour attribute bitstream is formed after the encoding of the colour information is completed, then, the reflectance information is encoded, and a reflectance attribute bitstream is formed after the encoding of the reflectance information is completed. In a process of predicting the reflectance information, when the RDO is not used to select the optimal prediction mode, the prediction mode (predMode) of reflectance information will be, by default, the prediction mode inherited from the encoding of the colour attribute, i.e., reflectance information will use, by default, the prediction mode of the colour information. However, characteristics of the colour attribute are different from characteristics of the reflectance attribute. When the reflectance information is predicted by using the prediction mode directly inherited from the colour attribute, logic errors will be produced, which may lead to the deviation of the prediction result, low prediction accuracy and low encoding and decoding performance.

Embodiments of the present disclosure provide a decoding method, as shown in FIG. 5, and the decoding method includes operations 501 to 504.

In operation 501, neighbouring points of a current point in a point cloud to be encoded are determined, and a first parameter is calculated according to the neighbouring points, where the first parameter is a difference between a maximum value and a minimum value among reconstructed values of first attributes of the neighbouring points.

In operation 502, in response to the first parameter being less than a threshold, a prediction value of the first attribute of the current point is determined by using a preset first prediction mode.

In operation 503, a difference between an original value of the first attribute of the current point and the prediction value is calculated as a residual value of the first attribute of the current point.

In operation 504, the residual value subjected to quantization is encoded.

In some exemplary embodiments, the first attribute includes at least one of: reflectance information, or colour information.

In some exemplary embodiments, the first prediction mode includes at least one of: using a weighted average of attribute values of neighbouring points as the prediction value; or using an attribute value of one of the neighbouring points as the prediction value.

In some exemplary embodiments, using the weighted average of the attribute values of the neighbouring points as the prediction value includes:

a weighted average of attribute values of M neighbouring points is used as the prediction value, where M is a positive integer greater than 1.

In some exemplary embodiments, using the attribute value of one of the neighbouring points as the prediction value includes:

an attribute value of an N-th neighbouring point of the current point is used as the prediction value, where N is a positive integer.

In some exemplary embodiments, the M neighbouring points comprise at least a part of first P neighbouring points of the current point, where P≥M.

In some exemplary embodiments, the neighbouring points of the current point comprise R neighbouring points, where R is a positive integer greater than 1.

In some exemplary embodiments, a value of M may be 3, 4 or 5.

In some exemplary embodiments, a value of N may be 1, 2 or 3.

In some exemplary embodiments, a value of R may be 3, 4 or 5.

In some exemplary embodiments, the method further includes following three operations.

In response to the first parameter being not less than the threshold, a second prediction mode is selected by adopting the RDO.

The prediction value of the first attribute of the current point is determined by using the second prediction mode.

Identification information of the second prediction mode is signalled, where the identification information is used for indicating a prediction mode.

In some exemplary embodiments, the second prediction mode includes at least one of:

using a weighted average value of attribute values of neighbouring points as the prediction value; or using an attribute value of one of the neighbouring points as the prediction value.

In some exemplary embodiments, using the weighted average of the attribute values of the neighbouring points as the prediction value includes:

a weighted average of attribute values of S neighbouring points is used as the prediction value, where S is a positive integer greater than 1, and the identification information is a preset index value and has global uniqueness.

In some exemplary embodiments, using the attribute value of one of the neighbouring points as the prediction value includes:

an attribute value of a T-th neighbouring point of the current point is used as the prediction value, where T is a positive integer, and the identification information is an index value of the T-th neighbouring point.

In some exemplary embodiments, the S neighbouring points comprise at least a part of first U neighbouring points of the current point, where U≥S.

In some exemplary embodiments, a value of S may be 3, 4 or 5.

In some exemplary embodiments, a value of T may be 1, 2 or 3.

In some exemplary embodiments, a value of U may be 3, 4 or 5.

An exemplary embodiment of the present disclosure provides an encoding method, as shown in FIG. 6, including operations 601 to 608.

In operation 601, neighbouring points of a current point in a point cloud to be encoded are determined, and a first parameter is calculated according to the neighbouring points, where the first parameter is a difference between a maximum value and a minimum value among reconstructed values of first attributes of the neighbouring points.

In some examples, the neighbouring points of the current point in the point cloud to be encoded are already encoded neighbouring points of the current point in the point cloud to be encoded.

In some examples, the neighbouring points of the current point may include R neighbouring points, where R is a positive integer greater than 1. In an example, a value of R may be 3, 4, or 5. For example, the neighbouring points of the current point include 3 neighbouring points, and the 3 neighbouring points may be 3 neighbouring points nearest to the current point based on the distance from near to far, or any neighbouring points among Z neighbouring points nearest to the current point, where Z>3, and Z is a positive integer.

In some examples, the first attribute includes at least one of: reflectance information, or colour information.

In an example, the first attribute includes the reflectance information, and the first parameter is a difference between a maximum value and a minimum value among reconstructed values of the reflectance information of the neighbouring points. For example, the first parameter maxDiff=max(Re)-min(Re), where max(Re) represents the maximum value among the reconstructed values of the reflectance information of the neighbouring points and min(Re) represents the minimum value among the reconstructed values of the reflectance information of the neighbouring points. For example, the neighbouring points of the current point include 3 neighbouring points, and the first parameter is the difference between the maximum value and the minimum value among the reconstructed values of the reflectance information of the 3 neighbouring points.

In an example, the first attribute includes the colour information, and the first parameter is a difference between a maximum value and a minimum value among reconstructed values of the colour information of the neighbouring points. For example, the first parameter maxDiff may be calculated by following four operations.

The maximum difference of the R components of the neighbouring points is calculated, i.e., max(R)-min(R).

The maximum difference of the G components of the neighbouring points is calculated, i.e., max(G)-min(G).

The maximum difference of the B components of the neighbouring points is calculated, i.e., max(B)-min(B).

The maximum value among the maximum differences of the R, G and B components is selected as the maxDiff.

That is to say, maxDiff=max(max(R)-min(R), max(G)-min(G), max(B)-min(B)), where max (R) represents the maximum value among the reconstructed values of the R components of the neighbouring points, min (R) represents the minimum value among the reconstructed values of the R components of the neighbouring points, max (G) represents the maximum value among the reconstructed values of the G components of the neighbouring points, min (G) represents the minimum value of the G components among the reconstructed values of the neighbouring points, max (B) represents the maximum value among the reconstructed values of the B components of the neighbouring points, and min (B) represents the minimum value among the reconstructed values of the B components of the neighbouring points. For example, the neighbouring points of the current point include 3 neighbouring points, and the first parameter is the difference between the maximum value and the minimum value among the reconstructed values of the colour information of the 3 neighbouring points. That is to say, the first parameter is the maximum value of the three values of the maximum difference of the R components, the maximum difference of the G components and the maximum difference of the B components of the 3 neighbouring points.

In operation 602, it is determined whether the first parameter is less than a threshold.

In some examples, the threshold may be preset. For example, a threshold corresponding to the colour information may be preset, and when the first attribute is the colour information, it is determined whether the first parameter is less than the threshold of the colour information. For another example, a threshold corresponding to the reflectance information may be preset, and when the first attribute is the reflectance information, it is determined whether the first parameter is less than the threshold of the reflectance information.

When the first parameter is less than the threshold, operations 603 to 605 are performed, and when the first parameter is not less than the threshold, operations 606 to 608 are performed.

In operation 603, a prediction value of the first attribute of the current point is determined by using a preset first prediction mode.

In some examples, the first prediction mode includes at least one of: using a weighted average of attribute values of neighbouring points as the prediction value; or using an attribute value of one of the neighbouring points as the prediction value. For example, the first prediction mode may be preset as using the weighted average of the attribute values of the neighbouring points as the prediction value. For another example, the first prediction mode may be preset as using the attribute value of one of the neighbouring points as the prediction value.

In some examples, using the weighted average of the attribute values of the neighbouring points as the prediction value includes:

a weighted average of attribute values of M neighbouring points is used as the prediction value, where M is a positive integer greater than 1. In an example, a value of M may be 3, 4 or 5. For example, the weighted average of attribute values of 3 neighbouring points may be used as the prediction value.

In some examples, the M neighbouring points includes at least a part of first P neighbouring points of the current point, where P≥M. For example, a value of P may be 5, a value of M may be 3, and 3 neighbouring points may be selected from the first 5 neighbouring points of the current point. The first P neighbouring points of the current point are the first P neighbouring points from the current point based on the distance from near to far, where P is a positive integer.

In some examples, the neighbouring points of the current point that are used for calculating the first parameter may be selected as the M neighbouring points. For example, the neighbouring points of the current point that are used for calculating the first parameter are selected as 3 neighbouring points, then the 3 neighbouring points can also be selected as the M neighbouring points. For example, 3 neighbouring points nearest to the current point are selected as the neighbouring points of the current point that are used for calculating the first parameter, and the weighted average of the attribute values of the 3 neighbouring points nearest to the current point is also used as the prediction value.

In some examples, points among the neighbouring points of the current point that are used for calculating the first parameter may be selected as the M neighbouring points, or points among the neighbouring points of the current point that are not used for calculating the first parameter may be selected the M neighbouring points. For example, 5 neighbouring points may be selected as the neighbouring points of the current point that are used for calculating the first parameter, and 3 neighbouring points may be selected as the M neighbouring points. The 3 neighbouring points may be 3 neighbouring points among the 5 neighbouring points, or the 3 neighbouring points may not be points among the 5 neighbouring points, or a part of the 3 neighbouring points may be points among the 5 neighbouring points. For example, 5 neighbouring points nearest to the current point are selected as the neighbouring points of the current point that are used for calculating the first parameter, and the weighted average of the attribute values of the 3 neighbouring points nearest to the current point is used as the prediction value.

In some examples, the weight of each neighbouring point may be a reciprocal of a square of a Euclidean distance between the current point and the neighbouring point.

In some examples, using the attribute value of one of the neighbouring points as the prediction value includes: an attribute value of an N-th neighbouring point of the current point is used as the prediction value, where N is a positive integer. In an example, a value of N may be 1, 2 or 3. The N-th neighbouring point is the N-th neighbouring point nearest to the current point based on the distance from near to far. For example, an attribute value of the first neighbouring point nearest to the current point may be used as the prediction value, and the attribute value may be a reconstructed value. For another example, an attribute value of the second neighbouring point nearest to the current point may be used as the prediction value. For another example, an attribute value of the third neighbouring point nearest to the current point may be used as the prediction value.

In some examples, a user may preset a first prediction mode for the encoding and decoding, for example, the user may preset the first prediction mode for the encoding end as using the weighted average of the attribute values of the M neighbouring points as the prediction value. For another example, the user may preset the first prediction mode for the encoding end as using the attribute value of the N-th neighbouring point of the current point as the prediction value. In an example, the first mode for the encoding end is identical to the first mode for the decoding end. In another example, the first mode for the encoding end is different from the first mode for the decoding end.

In some examples, the first prediction mode may further include using an average of neighbouring points as a prediction value. For example, an average value of attribute values of the selected 3 neighbouring points is used as the prediction value of the current point.

In some examples, the first prediction mode may further include using a value obtained by performing a mathematical operation on the attribute values of neighbouring points as a prediction value. The mathematical operation is any mathematical operation method other than weighted averaging and averaging.

In some examples, one of the multiple prediction modes is selected and set as the first prediction mode for the encoding end in advance. For example, the multiple prediction modes may be determined according to the neighbouring points of the current point that are used for calculating the first parameter.

For example, when there are 3 neighbouring points of the current point, the multiple prediction modes may include: a prediction mode of using a weighted average of attribute values of 3 neighbouring points as the prediction value, and prediction modes of respectively using one of the attribute values of the first, second and third neighbouring points as the prediction value. For example, as shown in Table 1, the multiple prediction modes include: the prediction mode 0, i.e., predMode=0 (predMode is assigned to a value of 0); the prediction mode 1, i.e., predMode=1; the prediction mode 2, i.e., predMode=2; and the prediction mode 3, i.e., predMode=3. In the prediction mode 0, the reciprocal of the square of the Euclidean distance between the neighbouring point and current point is used as the weight, and the weighted average of attribute values of 3 neighbouring points is used as the prediction value of the current point. In the prediction mode 1, the attribute value of the first neighbouring point (1st nearest point) is directly used as the prediction value. In the prediction mode 2, the attribute value of the second neighbouring point (2nd nearest point) is directly used as the prediction value. In the prediction mode 3, the attribute value of the third neighbouring point (3rd nearest point) is directly used as the prediction value. For example, taking the point P2 in FIG. 3 as an example, 3 neighbouring points P0, P5 and P4 of the point P2 are selected, one of the four prediction modes may be selected as the first prediction mode. The four prediction modes includes: the prediction mode 0, i.e., predMode=0 (predMode is assigned to a value of 0), i.e., the reciprocal of the square of the Euclidean distance between the neighbouring point and current point is used as the weight, and the weighted average is performed on the attribute values of P0, P5 and P4 to obtain a value as the prediction value of the current point; the prediction mode 1, i.e., predMode=1, the attribute value of the first neighbouring point (1st nearest point), i.e., P4, is directly used as the prediction value; the prediction mode 2, i.e., predMode=2, the attribute value of the second neighbouring point (2nd nearest point), i.e., P5, is directly used as the prediction value; and the prediction mode 3, i.e., predMode=3, the attribute value of the third neighbouring point (3rd nearest point), i.e., P0, is directly used as the prediction value. Each prediction mode may correspond to an identifier (that may be an index number). In this example, the index numbers of the four prediction modes, as shown in Table 1, are 0, 1, 2 and 3 respectively.

For another example, when there are 3 neighbouring points of the current point, the multiple prediction modes may include: prediction modes of respectively using one of the attribute values of the first, second and third neighbouring points as the prediction value. For example, as shown in Table 3, the multiple prediction modes include: the prediction mode 1, i.e., predMode=1, the attribute value of the first neighbouring point (1st nearest point) is directly used as the prediction value; the prediction mode 2, i.e., predMode=2, the attribute value of the second neighbouring point (2nd nearest point) is directly used as the prediction value; and the prediction mode 3, i.e., predMode=3, the attribute value of the third neighbouring point (3rd nearest point) is directly used as the prediction value. For example, taking the point P2 in FIG. 3 as an example, the 3 neighbouring points of the point P2 are selected as points P0, P5 and P4, and one of the three prediction modes is selected as the first prediction mode. The three prediction modes include: the prediction mode 1, i.e., predMode=1, the attribute value of the first neighbouring point (1st nearest point), i.e., P4, is directly used as the prediction value; the prediction mode 2, i.e., predMode=2, the attribute value of the second neighbouring point (2nd nearest point), i.e., P5, is directly used as the prediction value; and the prediction mode 3, i.e., predMode=3, the attribute value of the third neighbouring point (3rd nearest point), i.e., P0, is directly used as the prediction value.

Table 3

| Prediction mode | Prediction value |
|---|---|
| 1 | 1st nearest point |
| 2 | 2nd nearest point |
| 3 | 3rd nearest point |

In an example, the first prediction mode for the encoding end and the decoding end may be preset. For example, the default initialization value of the prediction mode for both the encoding end and the decoding end is set as the identifier corresponding to the first prediction mode. For example, when prediction mode 1 in Table 3 is set as the first prediction mode, the default initialization values at both the encoding end and the decoding end may be set to be 1. In an example, the first prediction mode for the encoding end may be set to be identical to the first prediction mode for the decoding end. In another example, the first prediction mode for the encoding end may be set to be different from the first prediction mode for the decoding end.

In operation 604, a difference between an original value of the first attribute of the current point and the prediction value is calculated as a residual value of the first attribute of the current point.

In operation 605, the residual value subjected to quantization is encoded.

In operation 606, a second prediction mode is selected by adopting the RDO; and the prediction value of the first attribute of the current point is determined by using the second prediction mode.

In some examples, the second prediction mode may be selected from multiple alternative prediction modes by using the RDO. For example, the multiple alternative prediction modes may include: a prediction mode of using the weighted average of the attribute values of the neighbouring points as the prediction value; and D prediction modes, where D is a positive integer. The D prediction modes include one or more of the following: based on the distance from near to far, the prediction modes, of respectively using one of the attribute values of the first, second,... and E-th nearest points of the current point as the prediction values, are respectively used as the first to E-th prediction modes, where E is a positive integer. For example, the multiple prediction modes may include the prediction mode of using the weighted average of the attribute values of the neighbouring points as the prediction value; the prediction mode of using the attribute value of the first neighbouring point nearest to the current point as the prediction value; the prediction mode of using the attribute value of the second neighbouring point nearest to the current point as the prediction value; and the prediction mode of using the attribute value of the third neighbouring point nearest to the current point as the prediction value. For another example, the multiple alternative prediction modes may include F prediction modes, where F is a positive integer. The F prediction modes include one or more of: based on the distance from near to far, the prediction modes, of respectively using one of the attribute values of the first, second,... and G-th nearest points of the current point as the prediction values, are respectively used as the first to G-th prediction modes, where G is a positive integer. For example, the multiple alternative prediction modes may include: the prediction mode of using the attribute value of the first neighbouring point nearest to the current point as the prediction value; the prediction mode of using the attribute value of the second neighbouring point nearest to the current point as the prediction value; and the prediction mode of using the attribute value of the third neighbouring point nearest to the current point as the prediction value.

In some examples, the operation that the second prediction mode is selected from the multiple alternative prediction modes by using the RDO includes:

for each of the multiple alternative prediction modes, following four operation are performed.

A prediction value attrPred corresponding to a prediction mode is calculated; the subtraction is performed between the reflectance value attrValue and the prediction value attrPred of the current point, and the resulting difference is quantized to obtain quantized residual attrResidualQuant, which is used as the distortion D of the RDO technology, i.e., D=attrResidualQuant.

The number of bits idxBits required to encode the prediction mode is calculated, and the number of bits idxBits is used as the bit rate R of the RDO technology, i.e., R = idxBits.

A cost score of the prediction mode is calculated, where the cost score=D+lambda$\times$R, where lambda=0.01$\times$Qstep, and Qstep is the quantization step.

The prediction mode with the minimum cost score is selected as the second prediction mode.

In some examples, the second prediction mode includes at least one of:

using a weighted average value of attribute values of neighbouring points as the prediction value; or using an attribute value of one of the neighbouring points as the prediction value.

In some examples, using the weighted average of the attribute values of the neighbouring points as the prediction value includes: a weighted average of attribute values of S neighbouring points is used as the prediction value, where S is a positive integer greater than 1.

In an example, a value of S may be 3, 4 or 5. For example, the weighted average of attribute values of 3 neighbouring points may be used as the prediction value.

In some examples, the S neighbouring points includes at least a part of first U neighbouring points of the current point, where U≥S. For example, a value of U may be 5, a value of S may be 3, and 3 neighbouring points may be selected from the first 5 neighbouring points of the current point. The first U neighbouring points of the current point are the first U neighbouring points from the current point based on the distance from near to far, where U is a positive integer.

In some examples, the S neighbouring points may be selected as the neighbouring points of the current point that are used for calculating the first parameter. For example, 3 neighbouring points can be selected as the neighbouring points of the current point that are used for calculating the first parameter, then the S neighbouring points can also be selected as the 3 neighbouring points. For example, the neighbouring points of the current point that are used for calculating the first parameter are selected as 3 neighbouring points nearest to the current point, and the weighted average of the attribute values of the 3 neighbouring points nearest to the current point is also used as the prediction value.

In some examples, the S neighbouring points may be selected as the neighbouring points of the current point that are used for calculating the first parameter or the S neighbouring points may be selected as points among the neighbouring points of the current point that are not used for calculating the first parameter. For example, 5 neighbouring points may be selected as the neighbouring points of the current point that are used for calculating the first parameter, and the S neighbouring points may be selected as 3 neighbouring points. The 3 neighbouring points may be 3 neighbouring points among the 5 neighbouring points, or the 3 neighbouring points may not be points among the 5 neighbouring points, or a part of the 3 neighbouring points may be points among the 5 neighbouring points. For example, the neighbouring points of the current point that are used for calculating the first parameter are selected as 5 neighbouring points nearest to the current point, and the weighted average of the attribute values of the 3 neighbouring points nearest to the current point is used as the prediction value.

In some examples, the weight of each neighbouring point may be the reciprocal of the square of the Euclidean distance between the current point and the neighbouring point.

In some examples, the weight of each neighbouring point may also be other values, such as, a preset coefficient.

In an example, S neighbouring points may be selected as the same as the M neighbouring points. For example, the weighted average of the attribute values of 3 neighbouring points nearest to the current point may be selected as the prediction value of the current point.

In an example, S neighbouring points may be selected to be different from the M neighbouring points. For example, 3 neighbouring points nearest to the current point may be selected as the M neighbouring points, and the weighted average of the attribute values of the selected 3 neighbouring points may be used as the prediction value of the current point; and 5-th and 7-th neighbouring points nearest to the current point may be selected as the S neighbouring points, and the weighted average of the attribute values of the selected 5-th and 7-th neighbouring points may be used as the prediction value of the current point.

In an example, points among the S neighbouring points may be partially identical to points among the M neighbouring points. For example, 3 neighbouring points nearest to the current point may be selected as the M neighbouring points, and the weighted average of the attribute values of the selected 3 neighbouring points may be used as the prediction value of the current point; and second and 7-th neighbouring points nearest to the current point may be selected as the S neighbouring points, and the weighted average of the attribute values of the selected second and 7-th nearest points may be used as the prediction value of the current point.

In some examples, using the attribute value of one of the neighbouring points as the prediction value includes: an attribute value of a T-th neighbouring point of the current point is used as the prediction value, where T is a positive integer. In an example, a value of T may be 1, 2, or 3. The T-th neighbouring point is a T-th neighbouring point nearest to the current point based on the distance from near to far. For example, an attribute value of the 1st neighbouring point nearest to the current point may be used as the prediction value, and the attribute value may be a reconstructed value. For another example, an attribute value of the 2nd neighbouring point nearest to the current point may be used as the prediction value. For another example, an attribute value of the 3rd neighbouring point nearest to the current point may be used as the prediction value.

In some examples, the second prediction mode may be selected from multiple alternative prediction modes by using the RDO. For example, the multiple alternative prediction modes may be determined according to the neighbouring points of the current point that are used for calculating the first parameter.

For example, when there are 3 neighbouring points of the current point, the multiple alternative prediction modes may include: the prediction mode of using the weighted average of the attribute values of the 3 neighbouring points as the prediction value, and prediction modes of respectively using one of the attribute values of the first, second and third nearest points as the prediction value. For example, as shown in Table 1, the multiple alternative prediction modes include: the prediction mode 0, i.e., predMode=0 (predMode is assigned to a value of 0); the prediction mode 1, i.e., predMode=1; the prediction mode 2, i.e., predMode=2; and the prediction mode 3, i.e., predMode=3. In the prediction mode 0, the reciprocal of the square of the Euclidean distance between the neighbouring point and current point is used as the weight, and the weighted average of attribute values of 3 neighbouring points is used as the prediction value of the current point. In the prediction mode 1, the attribute value of the first neighbouring point (1st nearest point) is directly used as the prediction value. In the prediction mode 2, the attribute value of the second neighbouring point (2nd nearest point) is directly used as the prediction value. In the prediction mode 3, the attribute value of the third neighbouring point (3rd nearest point) is directly used as the prediction value. For example, taking the point P2 in FIG. 3 as an example, 3 neighbouring points P0, P5 and P4 of the point P2 are selected, one of the four prediction modes may be selected as the second prediction mode. The four prediction modes includes: the prediction mode 0, i.e., predMode=0 (predMode is assigned to a value of 0), i.e., the reciprocal of the square of the Euclidean distance between the neighbouring point and current point is used as the weight, and the weighted average is performed on the attribute values of P0, P5 and P4 to obtain a value as the prediction value of the current point; the prediction mode 1, i.e., predMode=1, the attribute value of the first neighbouring point (1st nearest point), i.e., P4, is directly used as the prediction value; the prediction mode 2, i.e., predMode=2, the attribute value of the second neighbouring point (2nd nearest point), i.e., P5, is directly used as the prediction value; and the prediction mode 3, i.e., predMode=3, the attribute value of the third neighbouring point (3rd nearest point), i.e., P0, is directly used as the prediction value. Each prediction mode may correspond to an identifier (that may be an index number). In this example, the index numbers of the four prediction modes, as shown in Table 1, are 0, 1, 2 and 3 respectively.

For another example, when there are 3 neighbouring points of the current point, the multiple alternative prediction modes may include: prediction modes of respectively using one of the attribute values of the first, second and third nearest points as the prediction value. For example, as shown in Table 3, the multiple prediction modes include: the prediction mode 1, i.e., predMode=1, the attribute value of the first neighbouring point (1st nearest point) is directly used as the prediction value; the prediction mode 2, i.e., predMode=2, the attribute value of the second neighbouring point (2nd nearest point) is directly used as the prediction value; and the prediction mode 3, i.e., predMode=3, the attribute value of the third neighbouring point (3rd nearest point) is directly used as the prediction value.

In operation 607, a difference between an original value of the first attribute of the current point and the prediction value is calculated as a residual value of the first attribute of the current point.

In some examples, the residual value attrResidualQuant of the first attribute of the current point may can be calculated as follows.

$$\text{attrResidualQuant} = \frac{\text{attrValue} - \text{attrPredValue}}{\text{Qstep}}$$

Herein, attrPredValue is the attribute prediction value, attrValue is the attribute value (original value) of the current point, and the quantization step Qstep is calculated by a quantization parameter Qp.

In operation 608, the residual value subjected to quantization is encoded, and identification information of the second prediction mode is signalled, where the identification information is used for indicating a prediction mode.

In some examples, each prediction mode may correspond to an identifier. In an example, the identifier of the prediction mode of using the weighted average of attribute values of the neighbouring points as the prediction value may be set in advance to be a preset index value, and the identifier has global uniqueness. For example, the preset index value may be 0. In another example, an identifier of a prediction mode of using an attribute value of a T-th nearest point of the current point as a prediction value may be set in advance as an index value of the T-th nearest point. For example, the identifier of the prediction mode of using the attribute value of the T-th nearest point of the current point as the prediction value is set to be T. For another example, the identifier of the prediction mode of using the attribute value of the T-th nearest point of the current point as a prediction value is set to be 1, the identifier of the prediction mode of using the attribute value of the 2nd nearest point of the current point as the prediction value is set to be 2, and the identifier of the prediction mode of using the attribute value of the 3rd nearest point of the current point as the prediction value is set to be 3. The T-th nearest point of the current point is the T-th neighbouring point nearest to the current point based on the distance from near to far.

In some examples, the identification information may be an identification bit used for indicating information of the prediction mode, such as an index number of the prediction mode.

Embodiments of the present disclosure provide a decoding method, as shown in FIG. 7, the decoding method includes operations 702 to 704.

In operation 701, neighbouring points of a current point in a point cloud to be decoded are determined, and a first parameter is calculated according to the neighbouring points. The first parameter is a difference between a maximum value and a minimum value among reconstructed values of first attributes of the neighbouring points.

In operation 702, in response to the first parameter being less than a threshold, a prediction value of the first attribute of the current point is determined by using a preset first prediction mode.

In operation 703, a bitstream is parsed to obtain a residual value of the first attribute of the current point.

In operation 704, a sum of a residual value subjected to dequantization and the prediction value is calculated as a reconstructed value of the first attribute of the current point.

In some exemplary embodiments, the first attribute includes at least one of: reflectance information, or colour information.

In some exemplary embodiments, the first prediction mode includes at least one of: using a weighted average of attribute values of neighbouring points as the prediction value; or using the attribute value of one of the neighbouring points as the prediction value.

In some exemplary embodiments, using the weighted average of the attribute values of the neighbouring points as the prediction value includes:

a weighted average of attribute values of M neighbouring points is used as the prediction value, where M is a positive integer greater than 1.

In some exemplary embodiments, using the attribute value of one of the neighbouring points as the prediction value includes:

An attribute value of an N-th neighbouring point of the current point is used as the prediction value, where N is a positive integer.

In some exemplary embodiments, the neighbouring points of the current point comprise R neighbouring points, where R is a positive integer greater than 1.

In some exemplary embodiments, a value of M may be 3, 4 or 5.

In some exemplary embodiments, a value of N may be 1, 2 or 3.

In some exemplary embodiments, a value of R may be 3, 4 or 5.

In some exemplary embodiments, the method further includes following two operations.

In response to the first parameter being not less than the threshold, the bitstream is parsed to obtain identification information of a prediction mode.

A prediction value of the first attribute of the current point is determined by using the prediction mode indicated by the identification information.

In some exemplary embodiments, in response to the identification information being a preset index value, a weighted average value of attribute values of neighbouring points is used as the prediction value of the current point.

In response to the identification information being an index value other than the preset index value, an attribute value of one of the neighbouring points is used as the prediction value of the current point.

In some exemplary embodiments, using the weighted average value of the attribute values of the neighbouring points as the prediction value of the current point includes:

A weighted average of attribute values of S neighbouring points is used as the prediction value, where S is a positive integer greater than 1.

In some exemplary embodiments, using the attribute value of one of the neighbouring points as the prediction value of the current point includes:

Attribute value of a T-th neighbouring point is used as the prediction value of the current point, where T is an index value corresponding to the identification information.

An exemplary embodiment of the present disclosure provides a decoding method, as shown in FIG. 8, the decoding method includes operations 801 to 805.

In operation 801, neighbouring points of a current point in a point cloud to be decoded are determined, and a first parameter is calculated according to the neighbouring points. The first parameter is a difference between a maximum value and a minimum value among reconstructed values of first attributes of the neighbouring points.

In some examples, the neighbouring points of the current point in the point cloud to be decoded are already decoded neighbouring points of the current point in the point cloud to be decoded.

In some examples, the neighbouring points of the current point may include R neighbouring points, where R is a positive integer greater than 1. In an example, a value of R may be 3, 4, or 5. For example, the neighbouring points of the current point include 3 neighbouring points, and the 3 neighbouring points may be 3 neighbouring points nearest to the current point based on the distance from near to far, or any neighbouring points among Z neighbouring points nearest to the current point, where $Z>3$.

In some examples, the first attribute includes at least one of: reflectance information, or colour information.

In an example, the first attribute includes the reflectance information, and the first parameter is a difference between a maximum value and a minimum value among reconstructed values of the reflectance information of the neighbouring points. For example, the first parameter maxDiff=max(Re)-min(Re), where max(Re) represents the maximum value among the reconstructed values of the reflectance information of the neighbouring points and min(Re) represents the minimum value among the reconstructed values of the reflectance information of the neighbouring points. For example, the neighbouring points of the current point include 3 neighbouring points, and the first parameter is the difference between the maximum value and the minimum value among the reconstructed values of the reflectance information of the 3 neighbouring points.

In an example, the first attribute includes the colour information, and the first parameter is a difference between a maximum value and a minimum value among reconstructed values of the colour information of the neighbouring points. For example, the first parameter maxDiff may be calculated by following four operations.

The maximum difference of the R components of the neighbouring points is calculated, i.e., max(R)-min(R).

The maximum difference of the G component of the neighbouring points is calculated, i.e., max(G)-min(G).

The maximum difference of the he B component of the neighbouring points is calculated, i.e., max(B)-min(B).

The maximum value among the maximum differences of the R, G and B components is selected as the maxDiff.

That is to say, maxDiff=max(max(R)-min(R), max(G)-min(G), max(B)-min(B)), where max (R) represents the maximum value among the reconstructed values of the R components of the neighbouring points, min (R) represents the minimum value among the reconstructed values of the R components of the neighbouring points, max (G) represents the maximum value among the reconstructed values of the G components of the neighbouring points, min (G) represents the minimum value of the G components among the reconstructed values of the neighbouring points, max (B) represents the maximum value among the reconstructed values of the B components of the neighbouring points, and min (B) represents the minimum value among the reconstructed values of the B components of the neighbouring points. For example, the neighbouring points of the current point include 3 neighbouring points, and the first parameter is the difference between the maximum value and the minimum value among the reconstructed values of the colour information of the 3 neighbouring points. That is to say, the first parameter is the maximum value of the three values of the maximum difference of the R components, the maximum difference of the G components and the maximum difference of the B components of the 3 neighbouring points.

In operation 802, it is determined whether the first parameter is less than a threshold.

In some examples, the threshold may be preset. For example, a threshold corresponding to the colour information may be preset, and when the first attribute is the colour information, it is determined whether the first parameter is less than the threshold of the colour information. For another example, a threshold corresponding to the reflectance information may be preset, and when the first attribute is the reflectance information, it is determined whether the first parameter is less than the threshold of the reflectance information.

When the first parameter is less than the threshold, operation 803 is performed, and when the first parameter is not less than the threshold, operation 804 is performed.

In operation 803, a prediction value of the first attribute of the current point is determined by using a preset first prediction mode.

In some examples, the first prediction mode includes at least one of: using a weighted average of attribute values of neighbouring points as the prediction value; or using an attribute value of one of the neighbouring points as the prediction value. For example, the first prediction mode may be preset as using the weighted average of the attribute values of the neighbouring points as the prediction value. For another example, the first prediction mode may be preset as using the attribute value of one of the neighbouring points as the prediction value.

In some examples, using the weighted average of the attribute values of the neighbouring points as the prediction value includes:

a weighted average of attribute values of M neighbouring points is used as the prediction value, where M is a positive integer greater than 1. In an example, a value of M may be 3, 4 or 5. For example, the weighted average of attribute values of 3 neighbouring points may be used as the prediction value.

In some examples, the M neighbouring points includes at least a part of first P neighbouring points of the current point, where P≥M. For example, a value of P may be 5, a value of M may be 3, and 3 neighbouring points may be selected from the first 5 neighbouring points of the current point. The first P neighbouring points of the current point are the first P neighbouring points from the current point based on the distance from near to far, where P is a positive integer.

In some examples, the neighbouring points of the current point that are used for calculating the first parameter may be selected as the M neighbouring points. For example, the neighbouring points of the current point that are used for calculating the first parameter are selected as 3 neighbouring points, then the 3 neighbouring points can also be selected as the M neighbouring points. For example, 3 neighbouring points nearest to the current point are selected as the neighbouring points of the current point that are used for calculating the first parameter, and the weighted average of the attribute values of the 3 neighbouring points nearest to the current point is also used as the prediction value.

In some examples, points among the neighbouring points of the current point that are used for calculating the first parameter may be selected as the M neighbouring points, or points among the neighbouring points of the current point that are not used for calculating the first parameter may be selected the M neighbouring points. For example, 5 neighbouring points may be selected as the neighbouring points of the current point that are used for calculating the first parameter, and 3 neighbouring points may be selected as the M neighbouring points. The 3 neighbouring points may be 3 neighbouring points among the 5 neighbouring points, or the 3 neighbouring points may not be points among the 5 neighbouring points, or a part of the 3 neighbouring points may be points among the 5 neighbouring points. For example, 5 neighbouring points nearest to the current point are selected as the neighbouring points of the current point that are used for calculating the first parameter, and the weighted average of the attribute values of the 3 neighbouring points nearest to the current point is used as the prediction value.

In some examples, the weight of each neighbouring point may be a reciprocal of a square of a Euclidean distance between the current point and the neighbouring point.

In some examples, the weight of each neighbouring point may also be other values, such as, a preset coefficient.

In some examples, using the attribute value of one of the neighbouring points as the prediction value includes: an attribute value of an N-th neighbouring point of the current point is used as the prediction value, where N is a positive integer. In an example, a value of N may be 1, 2 or 3. The N-th neighbouring point is the N-th neighbouring point nearest to the current point based on the distance from near to far. For example, an attribute value of the first neighbouring point nearest to the current point may be used as the prediction value, and the attribute value may be a reconstructed value. For another example, an attribute value of the second neighbouring point nearest to the current point may be used as the prediction value. For another example, an attribute value of the third neighbouring point nearest to the current point may be used as the prediction value.

In some examples, a user may preset a first prediction mode for the encoding and decoding, for example, the user may preset the first prediction mode for the decoding end as using the weighted average of the attribute values of the M neighbouring points as the prediction value. For another example, the user may preset the first prediction mode for the encoding end as using the attribute value of the N-th neighbouring point of the current point as the prediction value. In an example, the first mode for the encoding end is identical to the first mode for the decoding end. In another example, the first mode for the encoding end is different from the first mode for the decoding end.

In some examples, the first prediction mode may further include: using an average of neighbouring points as a prediction value. For example, an average value of attribute values of the selected 3 neighbouring points is used as the prediction value of the current point.

In some examples, the first prediction mode may further include using a value obtained by performing a mathematical operation on the attribute values of neighbouring points as a prediction value. The mathematical operation is any mathematical operation method other than weighted averaging and averaging.

In operation 804, the bitstream is parsed to obtain identification information of a prediction mode; and a prediction value of the first attribute of the current point is determined by using the prediction mode indicated by the identification information.

In some examples, in response to the identification information being a preset index value, a weighted average value of attribute values of neighbouring points is used as the prediction value of the current point. For example, when the identifier of the prediction mode of using the weighted average of the attribute values of the neighbouring points as the prediction value is set to the index value 0 in advance, then when the identification information of the prediction mode obtained by parsing is 0, the prediction value of the current point is determined by using the prediction mode indicated by the identification information 0, i.e., the prediction mode of using the weighted average of the attribute values of the neighbouring points as the prediction value.

In some examples, the prediction mode, indicated by the identification information, using the weighted average of the attribute values of the neighbouring points as the prediction value of the current point includes:

A weighted average of attribute values of S neighbouring points is used as the prediction value, where S is a positive integer greater than 1.

In an example, a value of S may be 3, 4 or 5. For example, the weighted average of attribute values of 3 neighbouring points may be used as the prediction value.

In some examples, the S neighbouring points includes at least a part of first U neighbouring points of the current point, where $U \geq S$. For example, a value of U may be 5, a value of S may be 3, and 3 neighbouring points may be selected from the first 5 neighbouring points of the current point. The first U neighbouring points of the current point are the first U neighbouring points from the current point based on the distance from near to far.

In some examples, the S neighbouring points may be selected as the neighbouring points of the current point that are used for calculating the first parameter. For example, 3 neighbouring points can be selected as the neighbouring points of the current point that are used for calculating the first parameter, then the S neighbouring points can also be selected as the 3 neighbouring points. For example, the neighbouring points of the current point that are used for calculating the first parameter are selected as 3 neighbouring points nearest to the current point, and the weighted average of the attribute values of the 3 neighbouring points nearest to the current point is also used as the prediction value.

In some examples, the S neighbouring points may be selected as the neighbouring points of the current point that are used for calculating the first parameter or the S neighbouring points may be selected as points among the neighbouring points of the current point that are not used for calculating the first parameter. For example, 5 neighbouring points may be selected as the neighbouring points of the current point that are used for calculating the first parameter, and the S neighbouring points may be selected as 3 neighbouring points. The 3 neighbouring points may be 3 neighbouring points among the 5 neighbouring points, or the 3 neighbouring points may not be points among the 5 neighbouring points, or a part of the 3 neighbouring points may be points among the 5 neighbouring points. For example, the neighbouring points of the current point that are used for calculating the first parameter are selected as 5 neighbouring points nearest to the current point, and the weighted average of the attribute values of the 3 neighbouring points nearest to the current point is used as the prediction value.

In some examples, the weight of each neighbouring point may be the reciprocal of the square of the Euclidean distance between the current point and the neighbouring point.

In some examples, the weight of each neighbouring point may also be other values, such as, a preset coefficient.

In an example, S neighbouring points may be selected as the same as the M neighbouring points. For example, the weighted average of the attribute values of 3 neighbouring points nearest to the current point may be selected as the prediction value of the current point.

In an example, S neighbouring points may be selected to be different from the M neighbouring points. For example, 3 neighbouring points nearest to the current point may be selected as the M neighbouring points, and the weighted average of the attribute values of the selected 3 neighbouring points may be used as the prediction value of the current point; and 5-th and 7-th neighbouring points nearest to the current point may be selected as the S neighbouring points, and the weighted average of the attribute values of the selected 5-th and 7-th nearest points may be used as the prediction value of the current point.

In an example, points among the S neighbouring points may be partially identical to points among the M neighbouring points. For example, 3 neighbouring points nearest to the current point may be selected as the M neighbouring points, and the weighted average of the attribute values of the selected 3 neighbouring points may be used as the prediction value of the current point; and second and 7-th neighbouring points nearest to the current point may be selected as the S neighbouring points, and the weighted average of the attribute values of the selected second and 7-th nearest points may be used as the prediction value of the current point.

In some examples, in response to the identification information being an index value other than the preset index value, an attribute value of one of the neighbouring points is used as the prediction value of the current point. In an example, using the attribute value of one of the neighbouring points as the prediction value includes: an attribute value of a T-th neighbouring point of the current point is used as the prediction value, where T is a positive integer. In an example, a value of T may be 1, 2, or 3. The T-th neighbouring point is the T-th neighbouring point nearest to the current point based on the distance from near to far. For example, the preset index value 1 indicates using the attribute value of the first nearest point of the current point as the prediction value; the index value 2 indicates using the attribute value of the second nearest point of the current point as the prediction value; and the index value 1 indicates using the attribute value of the third nearest point of the current point as the prediction value. When the identification information obtained by parsing is 1, the attribute value of the first nearest point of the current point is used as the prediction value of the current point; when the identification information obtained by parsing is 2, the attribute value of the second nearest point of the current point is used as the prediction value of the current point; and when the identification information obtained by parsing is 3, the attribute value of the third nearest point of the current point is used as the prediction value of the current point. The first, second and third nearest points are the first, second and third neighbouring points nearest to the current point based on the distance from near to far.

In operation 805, a bitstream is parsed to obtain a residual value of the first attribute of the current point; and a sum of a residual value subjected to dequantization and the prediction value is calculated as a reconstructed value of the first attribute of the current point.

Embodiments of the present disclosure provide an encoding method, as shown in FG. 9, the encoding method includes operations 901 to 904.

In operation 901, neighbouring points of a current point in a point cloud to be encoded are determined, and a first parameter is calculated according to the neighbouring points, where the first parameter is a difference between a maximum value and a minimum value among reconstructed values of first attributes of the neighbouring points.

In operation 902, in response to the first parameter being less than a threshold, a prediction value of the first attribute of the current point is determined by using a preset first prediction mode.

In operation 903, a difference between an original value of the first attribute of the current point and the prediction value is calculated as a residual value of the first attribute of the current point.

In operation 904, the residual value subjected to quantization is encoded, and identification information of the first prediction mode is signalled, where the identification information is used for indicating a prediction mode.

In some exemplary embodiments, the first attribute includes at least one of: reflectance information, or colour information.

In some exemplary embodiments, the first prediction mode includes at least one of: using a weighted average of attribute values of neighbouring points as the prediction value; or using the attribute value of one of the neighbouring points as the prediction value.

In some exemplary embodiments, using the weighted average of the attribute values of the neighbouring points as the prediction value includes:

a weighted average of attribute values of M neighbouring points is used as the prediction value, where M is a positive integer greater than 1.

In some exemplary embodiments, using the attribute value of one of the neighbouring points as the prediction value includes:

an attribute value of an N-th neighbouring point of the current point is used as the prediction value, where N is a positive integer.

In some exemplary embodiments, the M neighbouring points comprise at least a part of first P neighbouring points of the current point, where $P \geq M$.

In some exemplary embodiments, the neighbouring points of the current point comprise R neighbouring points, where R is a positive integer greater than 1.

In some exemplary embodiments, a value of M may be 3, 4 or 5.

In some exemplary embodiments, a value of N may be 1, 2 or 3.

In some exemplary embodiments, a value of R may be 3, 4 or 5.

In some exemplary embodiments, the method further includes following three operations.

In response to the first parameter being not less than the threshold, a second prediction mode is selected by adopting the RDO.

The prediction value of the first attribute of the current point is determined by using the second prediction mode.

Identification information of the second prediction mode is signalled, where the identification information is used for indicating a prediction mode.

In some exemplary embodiments, the second prediction mode includes at least one of:

using a weighted average value of attribute values of neighbouring points as the prediction value; or using an attribute value of one of the neighbouring points as the prediction value.

In some exemplary embodiments, using the weighted average of the attribute values of the neighbouring points as the prediction value includes:

a weighted average of attribute values of S neighbouring points is used as the prediction value, where S is a positive integer greater than 1, and the identification information is a preset index value and has global uniqueness

In some exemplary embodiments, using the attribute value of one of the neighbouring points as the prediction value includes:

an attribute value of a T-th neighbouring point of the current point is used as the prediction value, where T is a positive integer, and the identification information is an index value of the T-th neighbouring point.

In some exemplary embodiments, the S neighbouring points comprise at least a part of first U neighbouring points of the current point, where $U \geq S$.

In some exemplary embodiments, a value of S may be 3, 4 or 5.

In some exemplary embodiments, a value of T may be 1, 2 or 3.

In some exemplary embodiments, a value of U may be 3, 4 or 5.

An exemplary embodiment of the present disclosure provides an encoding method, as shown in FIG. 10, the encoding method includes operations 1001 to 1008.

In operation 1001, neighbouring points of a current point in a point cloud to be encoded are determined, and a first parameter is calculated according to the neighbouring points, where the first parameter is a difference between a maximum value and a minimum value among reconstructed values of first attributes of the neighbouring points.

The related contents of the neighbouring points of the current point and the first parameter are identical to those of the above embodiments, which will not be described herein.

In operation 1002, it is determined whether the first parameter is less than a threshold.

In some examples, the threshold may be preset. For example, a threshold corresponding to the colour information may be preset, and when the first attribute is the colour information, it is determined whether the first parameter is less than the threshold of the colour information. For another example, a threshold corresponding to the reflectance information may be preset, and when the first attribute is the reflectance information, it is determined whether the first parameter is less than the threshold of the reflectance information.

When the first parameter is less than the threshold, operations 1003 to 1005 are performed, and when the first parameter is not less than the threshold, operations 1006 to 1008 are performed.

In operation 1003, a prediction value of the first attribute of the current point is determined by using a preset first prediction mode.

The related contents of the first prediction mode are identical to those of the above embodiments, which will not be described herein.

The related contents of the second prediction mode are identical to those of the above embodiments, which will not be described herein.

In operation 1004, a difference between an original value of the first attribute of the current point and the prediction value is calculated as a residual value of the first attribute of the current point.

In operation 1005, the residual value subjected to quantization is encoded, and identification information of the first prediction mode is signalled, where the identification information is used for indicating a prediction mode.

The related contents of the identification information are identical to those of the above embodiments, which will not be described herein.

In operation 1006, a second prediction mode is selected by adopting the RDO; and the prediction value of the first attribute of the current point is determined by using the second prediction mode.

In operation 1007, a difference between an original value of the first attribute of the current point and the prediction value is calculated as a residual value of the first attribute of the current point.

In operation 1008, the residual value subjected to quantization is encoded, and identification information of the second prediction mode is signalled, where the identification information is used for indicating a prediction mode.

The related contents of the identification information are identical to those of the above embodiments, which will not be described herein.

Embodiments of the present disclosure provide a decoding method, as shown in FIG. 11, the decoding method includes operations 1101 to 1104.

In operation 1101, a bitstream is parsed to obtain identification information of a prediction mode of a current point in a point cloud to be decoded.

In operation 1102, a prediction value of a first attribute of the current point is determined by using the prediction mode indicated by the identification information.

In operation 1103, the bitstream is parsed to obtain a residual value of the first attribute of the current point.

In operation 1104, a sum of a residual value subjected to dequantization and the prediction value is calculated as a reconstructed value of the first attribute of the current point.

In some exemplary embodiments, the first attribute includes at least one of: reflectance information, or colour information.

In some exemplary embodiments, in response to the identification information being a preset index value, a weighted average value of attribute values of neighbouring points is used as the prediction value of the current point.

In response to the identification information being an index value other than the preset index value, an attribute value of one of the neighbouring points is used as the prediction value of the current point.

In some exemplary embodiments, using the weighted average value of the attribute values of the neighbouring points as the prediction value of the current point includes:

a weighted average of attribute values of X neighbouring points is used as the prediction value, where X is a positive integer greater than 1.

The contents related to using the weighted average of the attribute values of the neighbouring points as the prediction value are identical to those in the above embodiments, whichwill not be described herein.

In some exemplary embodiments, using the attribute value of one of the neighbouring points as the prediction value of the current point includes:

an attribute value of a Y-th neighbouring point is used as the prediction value of the current point, where Y is an index value corresponding to the identification information and Y is a positive integer.

The contents related to using the attribute value of one of the neighbouring points as the prediction value are identical to those in the above embodiments, whichwill not be described herein.

An exemplary embodiment of the present disclosure provides an encoding method including operations 1 and 2.

In operation 1, neighbouring points of a current point are determined, and maxDiff is calculated according to the neighbouring points.

In operation 2, when maxDiff<threshold, "a prediction mode of using weighted average of the attribute values of the neighbouring points" is used to determine the prediction value of the current point, and the encoder signals a mode number (i.e., a mode index number corresponding to the predictor index equal to 0 in Table 1). Conversely, when maxDiff≥threshold, one of the candidate neighbouring points is selected in a manner of the RDO, the value of the selected point is used as the prediction value of the current point, and the encoder signals a mode index number (i.e., the mode index number of 1, 2 or 3 corresponding to the predictor indexes not equal to 0 in Table 1) indicating the neighbouring point.

In some examples, for the neighboring points ("neighboring point set A") used for calculating the maxDiff, the neighboring points ("neighboring point set B") used for calculating the weighted average when "maxDiff<threshold", and the neighboring candidate points ("neighboring point set C") used in the process of determining the prediction value of the current point by RDO when "maxDiff>threshold", the three sets may include different numbers of points. For example, according to the distance from the current point, the first 5 nearest neighbours are selected as both the set A and set B, but for the set C, the first 3 nearest neighbours may be used for constructing 3 prediction modes when "maxDiff≥threshold".

An exemplary embodiment of the present disclosure provides a decoding method including operations 1 and 3.

In operation 1, neighbouring points of a current point are determined.

In operation 2, a bitstream is parsed to obtain a mode index number of the current point.

The mode index number is identification information of a prediction mode.

In operation 3, when the mode index number indicates using "the prediction mode of using the weighted average of the attribute values of the neighbouring points", the prediction value of the current point is calculated by using the neighbouring points. Conversely, when the mode index number indicates using "the attribute value of the neighbouring point to determine the prediction value of the current point", the decoder sets the prediction value of the current point to be equal to the attribute value of the neighbouring point indicated by the mode index number. (For example, the mode index number indicates the "index"-th point nearest to the current point among the neighbouring points according to the Euclidean distance).

An exemplary embodiment of the present disclosure provides a decoding method including operations 1 to 3.

In operation 1, a bitstream is parsed to obtain a mode index number of a current point.

In operation 2, when the mode index number indicates using "the prediction mode of using the weighted average of the attribute values of the neighbouring points", neighbouring points of the current point are determined, and a prediction value of the current point is calculated by using the neighbouring points.

In operation 3, when the mode index number indicates using "the attribute value of the neighbouring point to determine the prediction value of the current point", neighbouring points of the current point are determined, and the decoder sets the prediction value of the current point to be equal to the attribute value of the neighbouring point indicated by the mode index number. (For example, the mode index number index indicates the "index"-th point nearest to the current point among the neighbouring points according to the Euclidean distance).

In the present exemplary embodiment, the prediction mode is determined firstly, and then the neighbouring points are acquired according to the prediction mode, so that it is avoided that the acquired neighbouring points are not used, thereby avoiding wasting resources.

An exemplary embodiment of the present disclosure provides an encoding method including operations 1 and 2.

In operation 1, neighbouring points of a current point are determined, and maxDiff is calculated according to the neighbouring points.

In operation 2, when maxDiff<threshold, "a prediction mode of using weighted average of the attribute values of the neighbouring points" is used to determine the prediction value of the current point. In this case, the encoder does not need to signall the mode number (i.e., a mode index number corresponding to the predictor index equal to 0 in Table 1). Conversely, when maxDiff≥threshold, one of the candidate neighbouring points is selected in a manner of the RDO, the value of the selected point is used as the prediction value of the current point, and the encoder signals a mode index number (i.e., the mode index number of 1, 2 or 3 corresponding to the predictor indexes not equal to 0 in Table 1)indicating the neighbouring point.

An exemplary embodiment of the present disclosure provides a decoding method including operations 1 to 3.

In operation 1, neighbouring points of a current point are determined, and a value (i.e., maxDiff) of the first parameter is calculated.

In operation 2, when a Y value of the maxDiff is a positive integer and less than a threshold, the prediction value of the current point is calculated by using the "the prediction mode of using the weighted average of the attribute values of the neighbouring point" (that is, the prediction mode corresponds to the mode index number, i.e., the predictor index equal to 0 in Table 1). Herein, the decoder derives the mode information of the current point according to the existing decoding information, and does not need to parse the bitstream to obtain the mode information.

In operation 3, when the value of the maxDiff is greater than the threshold, the decoder parses the bitstream to obtain the mode index number. The decoder sets the prediction value of the current point to be equal to the attribute value of the neighbouring point indicated by the mode index number.

Embodiments of the present disclosure also provide an encoder, as shown in FIG. 12. The encoder includes a processor and a memory configured to store a computer program executable on the processor, where the processor is configured to implement, when executing the computer program, the encoding method of any one of the above.

In some examples, as shown in FIG. 13, the processing flow of the encoder includes: the maximum difference maxDiff (i.e., the first parameter) of the attribute values is calculated for the neighbouring point set of the current point; it is determined whether the maxDiff <a threshold; a preset first prediction mode preMode is selected to calculate an attribute prediction value of the point cloud when the maxDiff <the threshold; otherwise, a second prediction mode is selected by performing the RDO to calculate the attribute prediction value of the point cloud; residual of the attribute of the point cloud is calculated; the residual is encoded and the encoded residual is signalled in the attribute bitstream when the prediction mode selected by the RDO is not selected; the prediction mode (i.e., the identification information of the prediction mode is signalled, e.g. the is signalled preMode1 when the selected second prediction mode is the prediction mode 1) and residual are encoded; and the encoded codewords are signalled in the attribute bitstream. In an example, the first prediction mode preMode may be one of the prediction modes 0, 1, 2 or 3 shown in Table 1, and one of the prediction modes 1, 2 or 3 may be selected as the second prediction mode by the RDO.

Embodiments of the present disclosure also provide a decoder, as shown in FIG. 14. The decoder includes a processor and a memory configured to store a computer program executable on the processor, where the processor is configured to implement, when executing the computer program, the decoding method of any one of the above.

In an example, as shown in FIG. 15, the processing flow of the decoder includes: an attribute bitstream is acquired, a residual is acquired by decoding, a maximum difference maxDiff (i.e., a first parameter) of attribute values is calculated for a neighbouring point set of a current point, it is determined whether maxDiff<a threshold; a preset first prediction mode preMode is selected to calculate an attribute prediction value of the point cloud when the maxDiff<the threshold; otherwise, the prediction mode is obtained by decoding (i.e., identification information of the prediction mode is obtained by parsing), and the attribute prediction value of the point cloud is calculated by using the prediction mode preMode (i.e., the prediction mode indicated by the identification information) obtained by decoding; and reconstructed value of the attribute of the point cloud is calculated according to the residual and the prediction value to reconstruct the point cloud. In an example, the first prediction mode preMode may be one of prediction modes 0 1 2 or 3 shown in Table 1.

Embodiments of the present disclosure also provide a terminal including a point cloud codec. The point cloud codec includes at least one of the encoder or the decoder above.

Embodiments of the present disclosure also provide a codec system including a point cloud codec. The point cloud codec includes at least one of the encoder or the decoder above.

Through the technical schemes provided by the embodiments of the present disclosure, it is possible to avoid the problem that the prediction result may also have deviation due to the logic error generated in the process of encoding and decoding, which results in low encoding and decoding performance. For example, when the embodiments of the present disclosure are implemented on the G-PCC reference software TMC13 V12.0, the test result obtained by testing the test sequence of the test set cat3-fused required by the MPEG under the CTC CY test condition is that the end-to-end rate percentage (End to End BD-AttrRate%) is -0.1%. The test result indicates that the technical schemes provided by the embodiments of the present disclosure can effectively improve the encoding and decoding performance.

FIG. 16 is a schematic diagram of a framework of an encoding device. As shown in FIG. 16, the encoding device 1 may include a processor 101, a memory 103 and a bus system 104. The processor 101 is connected to the memory 103 through the bus system 104. The memory 103 is configured to store instructions; and the processor 101 is configured to perform any one of the prediction method, the encoding method or the decoding method described in the present disclosure.

The processor 101 may be a central processing unit (CPU), and the processor 101 may also be other general purpose processors, a Digital Signal Processor (DSP), an Application Specific Integrated Circuit (ASIC), a Field Programmable Gate Array (FPGA) or other programmable logic devices, discrete gate or transistor logic devices, discrete hardware components, and the like. The general purpose processors may be a microprocessor or the processor may be any conventional processor or the like.

The memory 103 may include a Read-Only Memory (ROM) device or a Random Access Memory (RAM) device. Any other suitable type of memory device may also be used as the memory 103. The memory 103 may include codes and data accessed by the processor 101 using the bus 104.

The bus system 104 may include a power bus, a control bus, a status signal bus and the like, in addition to a data bus. Various buses may be designated as the bus system 104 in the figures.

The encoding device 1 may also include one or more output devices, such as a display 102. The display 102 may be a tactile display that combines the display with a tactile sensation operable to sense a touch input. The display 102 may be connected to the processor 101 via a bus 104.

In one or more exemplary embodiments, the described functions may be implemented in hardware, software, firmware or any combination thereof. If the described functions are implemented in software, the function may be used as one or more instructions or codes to store on or transmit via a computer-readable medium and executed by a hardware-based processing unit. The computer-readable medium may include a computer-readable storage medium corresponding to a tangible medium, such as a data storage medium, or a communication medium including any medium that facilitates, such as according to a communication protocol, the transmission of a computer program from one place to another. In this manner, the computer-readable medium may generally correspond to a non-transitory tangible computer-readable storage medium or a communication medium such as a signal or carrier wave. The data storage medium may be any available medium accessible by one or more computers or one or more processors to retrieve instructions, codes, and/or data structures for implementing the technologies described in the present disclosure. The computer program product may include a computer-readable medium.

By way of example and not limitation, such computer-readable storage medium may include the RAM, the ROM, Electrically Erasable Programmable ROM (EEPROM), Compact Disc ROM (CD-ROM) or other optical disk storage device, disk storage device or other magnetic storage devices, flash memory, or any other medium that may be configured to store desired program codes in the form of instructions or data structures and that may be accessed by a computer. Furthermore, any connection may also be the computer-readable medium. For example, if instructions are transmitted from a Web site, server, or other remote source by using a coaxial cable, a fiber optic cable, a twisted pair, a digital subscriber line (DSL), or by using wireless technologies such as an infrared, a radio, and a microwave, then the coaxial cable, the fiber optic cable, the double rib, the DSL, or the wireless technologies such as the infrared, the radio, and the microwave are included in the definition of the medium. However, it should be understood that the computer-readable storage medium and the data storage medium do not include connections, carriers, signals, or other transitory medium, but are intended for the non-transitory tangible storage medium. As used herein, the magnetic disks and optical discs include the compact discs (CDs), laser discs, optical discs, digital video discs (DVDs), floppy disks or Blu-ray discs, etc. The magnetic disks generally reproduce data magnetically, and the optical discs reproduce data optically using lasers. The combination of the above should also be included in the scope of the computer readable medium.

The instructions may be executed by one or more processors, such as one or more DSPs, general purpose microprocessors, ASICs and FPGAs, or one or more processors of other equivalent integrated circuits or discrete logic circuits. Thus, the term "processor" as used herein may be any of the above-described structures or any other structures suitable for implementing the technologies described herein. In addition, in some aspects, the functionality described herein may be provided to dedicated hardware and/or software modules configured, by configuring, for encoding and decoding or incorporated in a combined codec. Furthermore, the technologies may be fully implemented in one or more circuits or logic elements.

The embodiments of the present disclosure may be widely implemented in apparatus or devices including a wireless phone an integrated circuit (IC) or a set of ICs (e.g. a chipset). In the embodiments of the present disclosure, various components, modules or units are descried to emphasize that the functional aspects of the technologies of the apparatus are perform by configuring, but are not required to be implemented by different hardware units. As described above, the various units may be combined in a hardware unit of the codec or provided by a collection of interoperable hardware units (including one or more processors as described above) in combination with suitable software and/or firmware.

Those of ordinary skill in the art will appreciate that all or some of the steps, systems, and functional modules/units in the above disclosed methods may be implemented as software, firmware, hardware, and appropriate combinations thereof. In hardware implementations, the division between functional modules/units mentioned in the above description does not necessarily correspond to the division of physical components. For example, a physical component may have multiple functions or a function or step may be performed cooperatively by several physical components. Some or all of the components may be implemented as software executed by a processor, such as a digital signal processor or a microprocessor, or as hardware, or as an integrated circuit, such as an application specific integrated circuit. Such software may be distributed on computer-readable medium including computer storage medium (or non-transitory medium) and communication medium (or transitory medium). As is well known to those of ordinary skill in the art, the term computer storage medium includes volatile and non-volatile, removable and non-removable medium implemented in any method or technique for storing information, such as computer-readable instructions, data structures, program modules, or other data. Computer storage medium include, but are not limited to, RAM, ROM, erasable Prom ROM (EPROM), flash memory or other memory technology, CD-ROM, DVD or other optical disk storage, magnetic cartridges, magnetic tapes, magnetic disk storage or other magnetic storage devices, or any other medium used for storing desired information and accessed by a computer. In addition, it is well known to those of ordinary skill in the art that communication medium typically contain computer readable instructions, data structures, program modules, or other data in modulated data signals such as carrier or other transmission mechanisms, and may include any information delivery medium.

## Claims

**1.** An encoding method, comprising:

determining neighbouring points of a current point in a point cloud to be encoded, and calculating a first parameter according to the neighbouring points, wherein the first parameter is a difference between a maximum value and a minimum value among reconstructed values of first attributes of the neighbouring points;
in response to the first parameter being less than a threshold, determining a prediction value of the first attribute of the current point by using a preset first prediction mode;
calculating a difference between an original value of the first attribute of the current point and the prediction value as a residual value of the first attribute of the current point; and
encoding the residual value subjected to quantization.

2. The encoding method of claim 1, wherein the first attribute comprises at least one of: reflectance information, or colour information.

3. The encoding method of claim 1, wherein the first prediction mode comprises at least one of: using a weighted average of attribute values of neighbouring points as the prediction value; or using an attribute value of one of the neighbouring points as the prediction value.

4. The encoding method of claim 3, wherein using the weighted average of the attribute values of the neighbouring points as the prediction value comprises:
using a weighted average of attribute values of M neighbouring points as the prediction value, where M is a positive integer greater than 1.

5. The encoding method of claim 3, wherein using the attribute value of one of the neighbouring points as the prediction value comprises:
using an attribute value of an N-th neighbouring point of the current point as the prediction value, where N is a positive integer.

6. The encoding method of claim 4, wherein the M neighbouring points comprise at least a part of first P neighbouring points of the current point, where $P \geq M$.

7. The encoding method of claim 3, wherein the neighbouring points of the current point comprise R neighbouring points, where R is a positive integer greater than 1.

8. The encoding method of claim 4, wherein a value of M is 3, 4 or 5.

9. The encoding method of claim 5, wherein a value of N is 1, 2 or 3.

10. The encoding method of claim 7, wherein a value of R is 3, 4 or 5.

11. The encoding method of claim 1, further comprising:

in response to the first parameter being not less than the threshold, selecting a second prediction mode by adopting a rate-distortion optimization (RDO);
determining the prediction value of the first attribute of the current point by using the second prediction mode; and signalling identification information of the second prediction mode, wherein the identification information is used for indicating a prediction mode.

12. The encoding method of claim 11, wherein the second prediction mode comprises at least one of:
using a weighted average value of attribute values of neighbouring points as the prediction value; or using an attribute value of one of the neighbouring points as the prediction value.

13. The encoding method of claim 12, wherein using the weighted average of the attribute values of the neighbouring points as the prediction value comprises:
using a weighted average of attribute values of S neighbouring points as the prediction value, where S is a positive integer greater than 1, and the identification information is a preset index value and has global uniqueness.

14. The encoding method of claim 12, wherein using the attribute value of one of the neighbouring points as the prediction value comprises:
using an attribute value of a T-th neighbouring point of the current point as the prediction value, where T is a positive integer, and the identification information is an index value of the T-th neighbouring point.

15. The encoding method of claim 13, wherein the S neighbouring points comprise at least a part of first U neighbouring points of the current point, where $U \geq S$.

16. The encoding method of claim 13, wherein a value of S is 3, 4 or 5.

17. The encoding method of claim 14, wherein a value of T is 1, 2 or 3.

**18.** The encoding method of claim 15, wherein a value of U is 3, 4 or 5.

**19.** The encoding method of claim 7, wherein a value of M is identical to a value of R.

**20.** A decoding method, comprising:

determining neighbouring points of a current point in a point cloud to be decoded, and calculating a first parameter according to the neighbouring points, wherein the first parameter is a difference between a maximum value and a minimum value among reconstructed values of first attributes of the neighbouring points;
in response to the first parameter being less than a threshold, determining a prediction value of the first attribute of the current point by using a preset first prediction mode;
parsing a bitstream to obtain a residual value of the first attribute of the current point; and
calculating a sum of a residual value subjected to dequantization and the prediction value as a reconstructed value of the first attribute of the current point.

**21.** The decoding method of claim 20, wherein the first attribute comprises at least one of: reflectance information, or colour information.

**22.** The decoding method of claim 20, wherein the first prediction mode comprises at least one of: using a weighted average of attribute values of neighbouring points as the prediction value; or using an attribute value of one of the neighbouring points as the prediction value.

**23.** The decoding method of claim 22, wherein using the weighted average of the attribute values of the neighbouring points as the prediction value comprises:
using a weighted average of attribute values of M neighbouring points as the prediction value, where M is a positive integer greater than 1.

**24.** The decoding method of claim 22, wherein using the attribute value of one of the neighbouring points as the prediction value comprises:
using an attribute value of an N-th neighbouring point of the current point as the prediction value, where N is a positive integer.

**25.** The decoding method of claim 20, wherein the neighbouring points of the current point comprise R neighbouring points, where R is a positive integer greater than 1.

**26.** The decoding method of claim 23, wherein a value of M is 3, 4 or 5.

**27.** The decoding method of claim 24, wherein a value of N is 1, 2 or 3.

**28.** The decoding method of claim 26, wherein a value of R is 3, 4 or 5.

**29.** The decoding method of claim 20, further comprising:

in response to the first parameter being not less than the threshold, parsing the bitstream to obtain identification information of a prediction mode; and
determining a prediction value of the first attribute of the current point by using the prediction mode indicated by the identification information.

**30.** The decoding method of claim 21, wherein

in response to the identification information being a preset index value, using a weighted average value of attribute values of neighbouring points as the prediction value of the current point; and
in response to the identification information being an index value other than the preset index value, using an attribute value of one of the neighbouring points as the prediction value of the current point.

**31.** The decoding method of claim 30, wherein using the weighted average value of the attribute values of the neighbouring points as the prediction value of the current point comprises:
using a weighted average of attribute values of S neighbouring points as the prediction value, where S is a positive integer greater than 1.

**32.** The decoding method of claim 32, wherein using the attribute value of one of the neighbouring points as the prediction value of the current point comprises:
using an attribute value of a T-th neighbouring point as the prediction value of the current point, where T is an index value corresponding to the identification information.

**33.** An encoding method, comprising:

determining neighbouring points of a current point in a point cloud to be encoded, and calculating a first parameter according to the neighbouring points, wherein the first parameter is a difference between a maximum value and a minimum value among reconstructed values of first attributes of the neighbouring points;
in response to the first parameter being less than a threshold, determining a prediction value of the first attribute of the current point by using a preset first prediction mode;
calculating a difference between an original value of the first attribute of the current point and the prediction value as a residual value of the first attribute of the current point;
encoding the residual value subjected to quantization; and
signalling identification information of the first prediction mode, wherein the identification information is used for indicating a prediction mode.

**34.** The encoding method of claim 33, wherein the first attribute comprises at least one of: reflectance information, or colour information.

**35.** The encoding method of claim 33, wherein the first prediction mode comprises at least one of: using a weighted average of attribute values of neighbouring points as the prediction value; or using an attribute value of one of the neighbouring points as the prediction value.

**36.** The encoding method of claim 35, wherein using the weighted average of the attribute values of the neighbouring points as the prediction value comprises:
using a weighted average of attribute values of M neighbouring points as the prediction value, where M is a positive integer greater than 1.

**37.** The encoding method of claim 35, wherein using the attribute value of one of the neighbouring points as the prediction value comprises:
using an attribute value of an N-th neighbouring point of the current point as the prediction value, where N is a positive integer.

**38.** The encoding method of claim 36, wherein the M neighbouring points comprise at least a part of first P neighbouring points of the current point, where $P \geq M$.

**39.** The encoding method of claim 33, wherein the neighbouring points of the current point comprise R neighbouring points, where R is a positive integer greater than 1.

**40.** The encoding method of claim 36, wherein a value of M is 3, 4 or 5.

**41.** The encoding method of claim 37, wherein a value of N is 1, 2 or 3.

**42.** The encoding method of claim 39, wherein a value of R is 3, 4 or 5.

**43.** The encoding method of claim 9, further comprising:

in response to the first parameter being not less than the threshold, selecting a second prediction mode by adopting a rate-distortion optimization (RDO); determining the prediction value of the first attribute of the current point by using the second prediction mode; and
signalling identification information of the second prediction mode, wherein the identification information is used for indicating a prediction mode.

**44.** The encoding method of claim 43, wherein the second prediction mode comprises at least one of:

using a weighted average value of attribute values of neighbouring points as the prediction value; or using an attribute value of one of the neighbouring points as the prediction value.

**45.** The encoding method of claim 44, wherein using the weighted average of the attribute values of the neighbouring points as the prediction value comprises:
using a weighted average of attribute values of S neighbouring points as the prediction value, where S is a positive integer greater than 1, and the identification information is a preset index value and has global uniqueness.

**46.** The encoding method of claim 44, wherein using the attribute value of one of the neighbouring points as the prediction value comprises:
using an attribute value of a T-th neighbouring point of the current point as the prediction value, where T is a positive integer, and the identification information is an index value of the T-th neighbouring point.

**47.** The encoding method of claim 45, wherein the S neighbouring points comprise at least a part of first U neighbouring points of the current point, where U≥S.

**48.** The encoding method of claim 45, wherein a value of S is 3, 4 or 5.

**49.** The encoding method of claim 46, wherein a value of T is 1, 2 or 3.

**50.** The encoding method of claim 47, wherein a value of U is 3, 4 or 5.

**51.** A decoding method, comprising:

parsing a bitstream to obtain identification information of a prediction mode of a current point in a point cloud to be decoded;
determining a prediction value of a first attribute of the current point by using the prediction mode indicated by the identification information;
parsing the bitstream to obtain a residual value of the first attribute of the current point; and
calculating a sum of a residual value subjected to dequantization and the prediction value as a reconstructed value of the first attribute of the current point.

**52.** The decoding method of claim 51, wherein the first attribute comprises at least one of: reflectance information, or colour information.

**53.** The decoding method according to claim 51, wherein

in response to the identification information being a preset index value, using a weighted average value of attribute values of neighbouring points as the prediction value of the current point; and
in response to the identification information being an index value other than the preset index value, using an attribute value of one of the neighbouring points as the prediction value of the current point.

**54.** The decoding method of claim 53, wherein using the weighted average value of the attribute values of the neighbouring points as the prediction value of the current point comprises:
using a weighted average of attribute values of X neighbouring points as the prediction value, where X is a positive integer greater than 1.

**55.** The decoding method of claim 53, wherein using the attribute value of one of the neighbouring points as the prediction value of the current point comprises:
using an attribute value of a Y-th neighbouring point as the prediction value of the current point, where Y is an index value corresponding to the identification information.

**56.** An encoder comprising: a processor and a memory configured to store a computer program executable on the processor, wherein the processor is configured to implement, when executing the computer program, the encoding method of any one of claims 1 to 19, or 33 to 50.

**57.** A decoder comprising: a processor and a memory configured to store a computer program executable on the processor, wherein the processor is configured to implement, when executing the computer program, the decoding method of any one of claims 20 to 32 or 51 to 55.

**58.** A terminal comprising: a point cloud codec comprising at least one of: the encoder of claim 56 or the decoder of claim 57.

**59.** A codec system comprising: a point cloud codec comprising at least one of the encoder of claim 56 or the decoder of claim 57.

**60.** A non-transitory computer-readable storage medium having stored a computer program thereon that, when executed by a processor, cause the processor to implement the encoding method of any one of claims 1 to 19, or 33 to 50, or the decoding method of any one of claims 20 to 32, or 51 to 55.

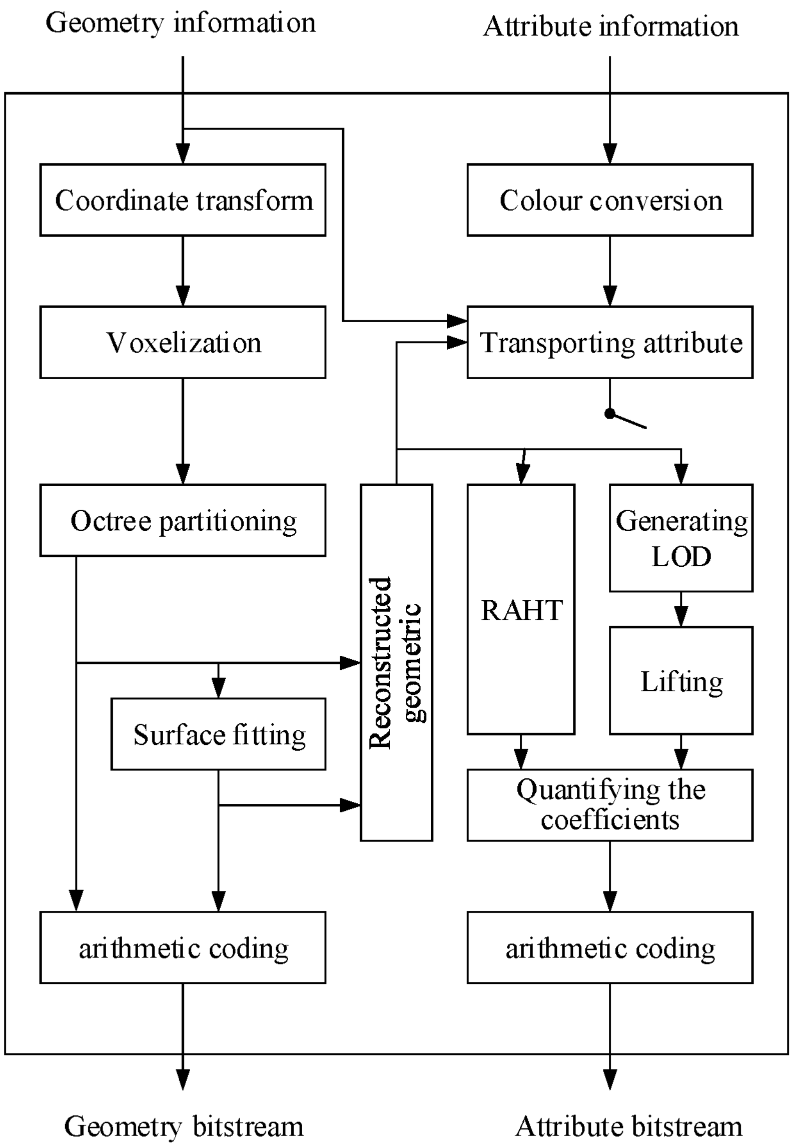
Geometry information
Attribute information
Coordinate transform
Colour conversion
Voxelization
Transporting attribute
Octree partitioning
Reconstructed geometric
RAHT
Generating LOD
Lifting
Surface fitting
Quantifying the coefficients
arithmetic coding
arithmetic coding
Geometry bitstream
Attribute bitstream

FIG. 1

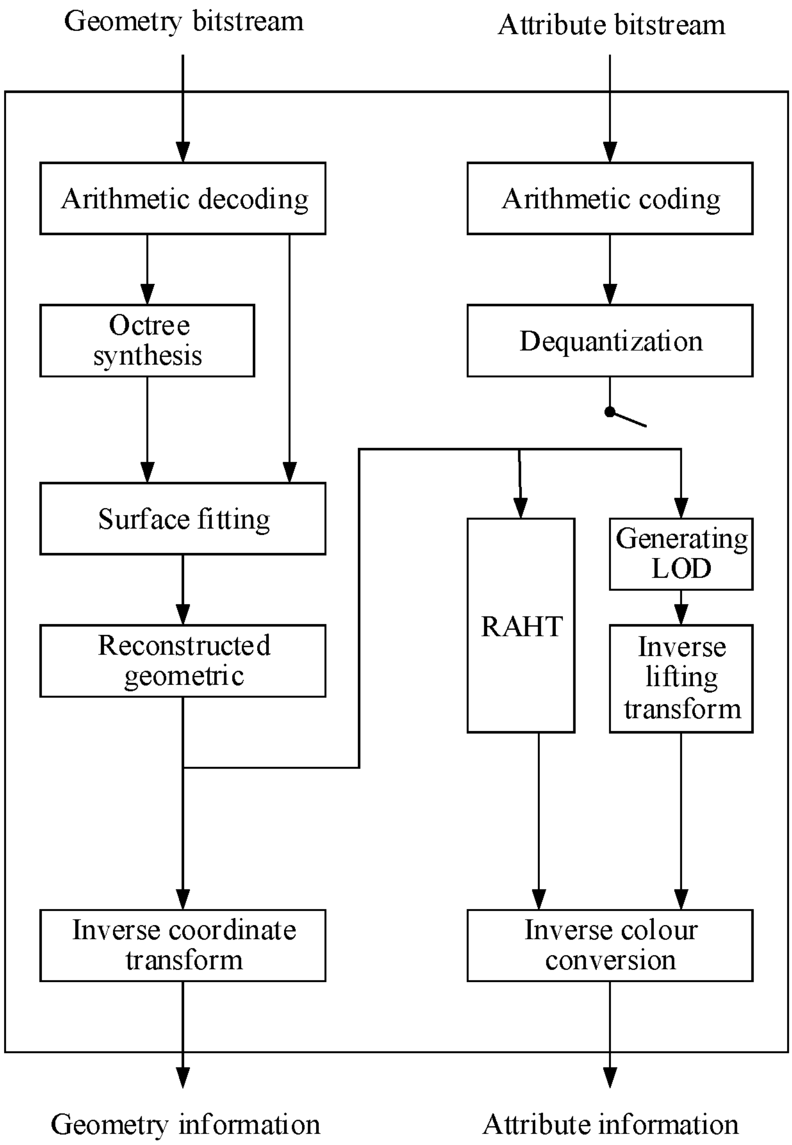
Geometry bitstream
Attribute bitstream
Arithmetic decoding
Arithmetic coding
Octree synthesis
Dequantization
Surface fitting
RAHT
Generating LOD
Reconstructed geometric
Inverse lifting transform
Inverse coordinate transform
Inverse colour conversion
Geometry information
Attribute information

FIG. 2

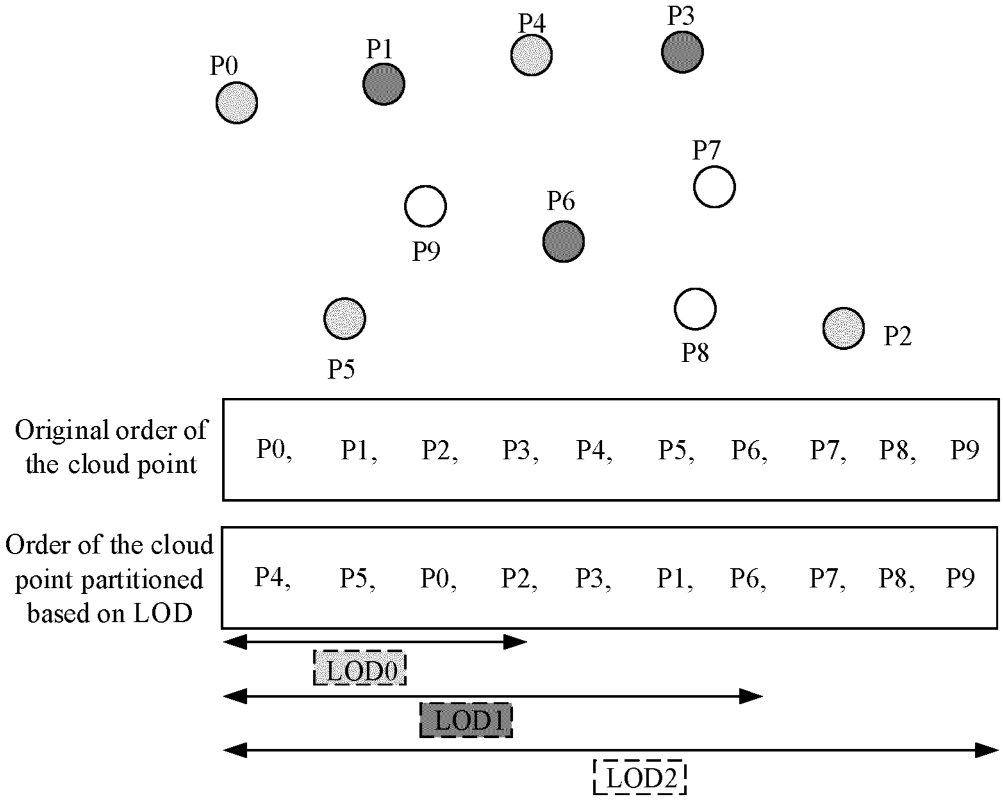
P0
P1
P4
P3
P7
P9
P6
P5
P8
P2
Original order of the cloud point
P0, P1, P2, P3, P4, P5, P6, P7, P8, P9
Order of the cloud point partitioned based on LOD
P4, P5, P0, P2, P3, P1, P6, P7, P8, P9
LOD0
LOD1
LOD2

**FIG. 3**

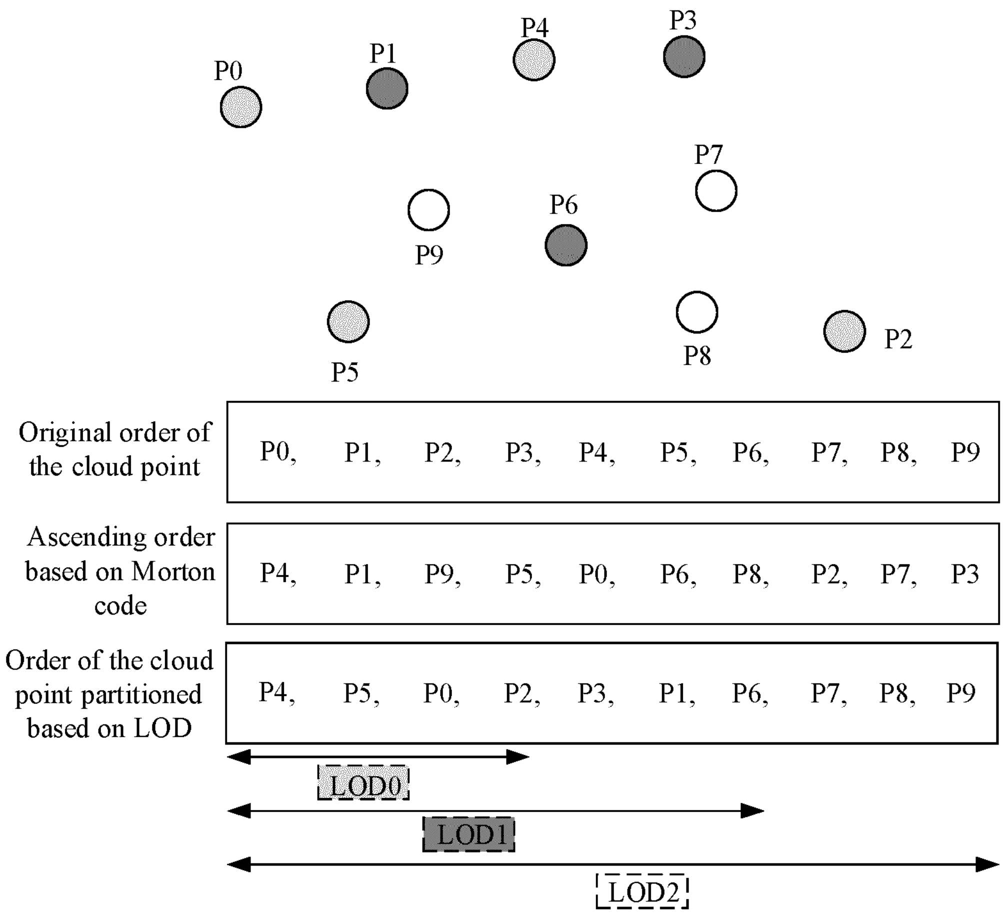
P0
P1
P4
P3
P7
P6
P9
P5
P8
P2
Original order of the cloud point
P0, P1, P2, P3, P4, P5, P6, P7, P8, P9
Ascending order based on Morton code
P4, P1, P9, P5, P0, P6, P8, P2, P7, P3
Order of the cloud point partitioned based on LOD
P4, P5, P0, P2, P3, P1, P6, P7, P8, P9
LOD0
LOD1
LOD2

FIG. 4

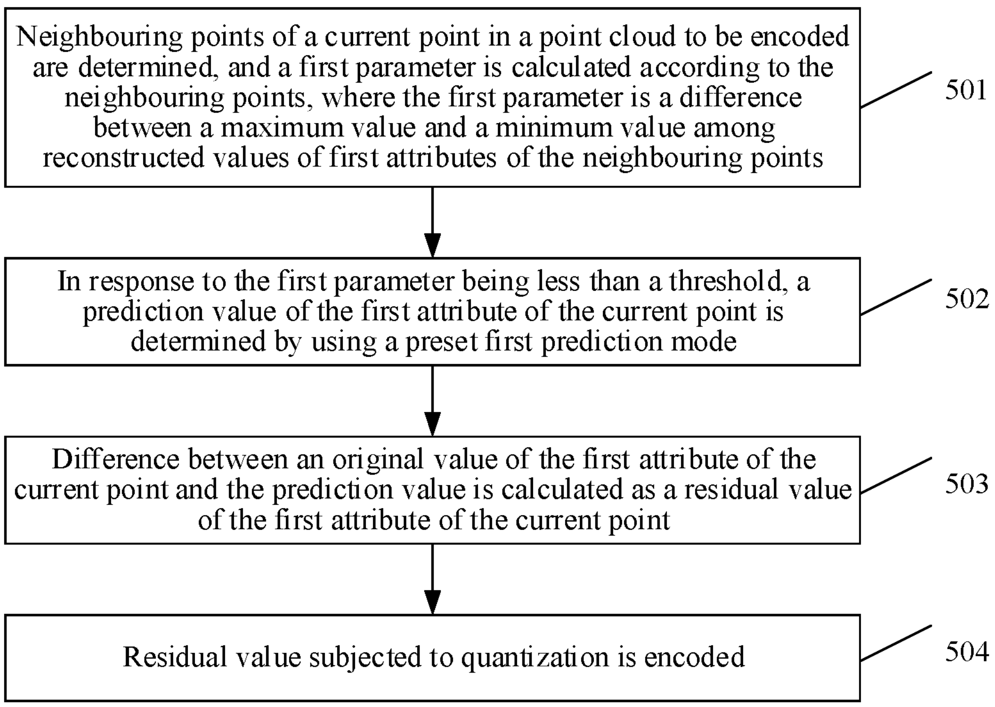
Neighbouring points of a current point in a point cloud to be encoded are determined, and a first parameter is calculated according to the neighbouring points, where the first parameter is a difference between a maximum value and a minimum value among reconstructed values of first attributes of the neighbouring points
501
In response to the first parameter being less than a threshold, a prediction value of the first attribute of the current point is determined by using a preset first prediction mode
502
Difference between an original value of the first attribute of the current point and the prediction value is calculated as a residual value of the first attribute of the current point
503
Residual value subjected to quantization is encoded
504

**FIG. 5**

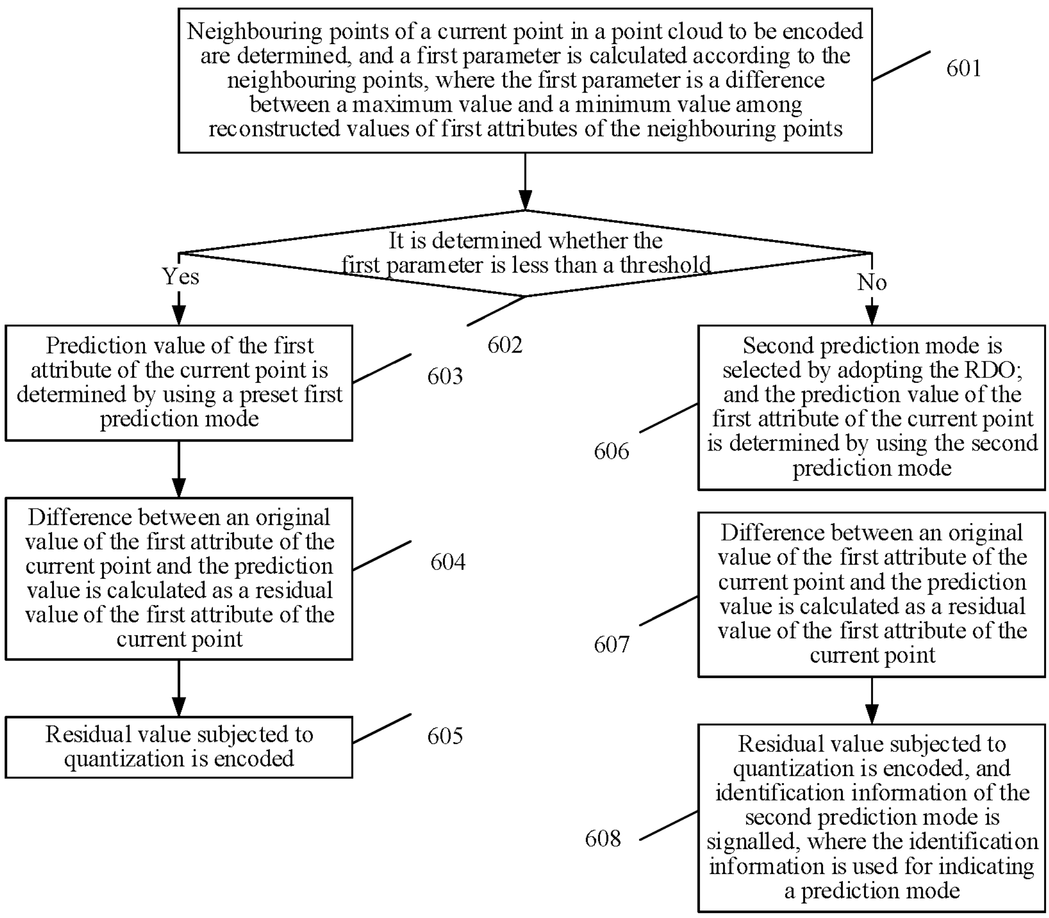
Neighbouring points of a current point in a point cloud to be encoded are determined, and a first parameter is calculated according to the neighbouring points, where the first parameter is a difference between a maximum value and a minimum value among reconstructed values of first attributes of the neighbouring points
601
It is determined whether the first parameter is less than a threshold
602
Yes
No
Prediction value of the first attribute of the current point is determined by using a preset first prediction mode
603
Difference between an original value of the first attribute of the current point and the prediction value is calculated as a residual value of the first attribute of the current point
604
Residual value subjected to quantization is encoded
605
Second prediction mode is selected by adopting the RDO; and the prediction value of the first attribute of the current point is determined by using the second prediction mode
606
Difference between an original value of the first attribute of the current point and the prediction value is calculated as a residual value of the first attribute of the current point
607
Residual value subjected to quantization is encoded, and identification information of the second prediction mode is signalled, where the identification information is used for indicating a prediction mode
608

FIG. 6

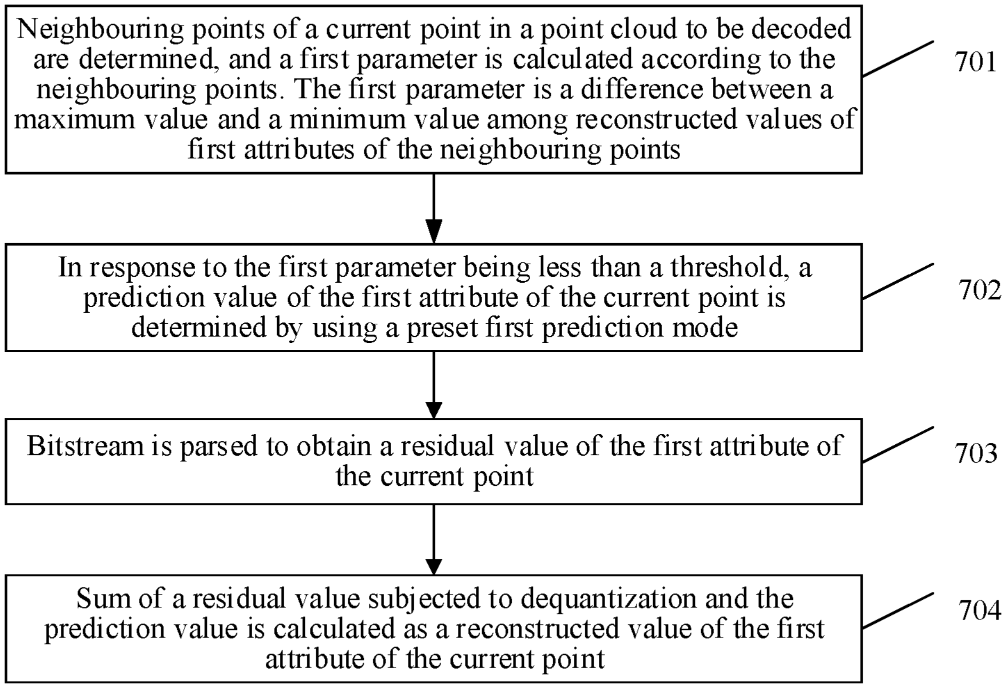
Neighbouring points of a current point in a point cloud to be decoded are determined, and a first parameter is calculated according to the neighbouring points. The first parameter is a difference between a maximum value and a minimum value among reconstructed values of first attributes of the neighbouring points
701
In response to the first parameter being less than a threshold, a prediction value of the first attribute of the current point is determined by using a preset first prediction mode
702
Bitstream is parsed to obtain a residual value of the first attribute of the current point
703
Sum of a residual value subjected to dequantization and the prediction value is calculated as a reconstructed value of the first attribute of the current point
704

FIG. 7

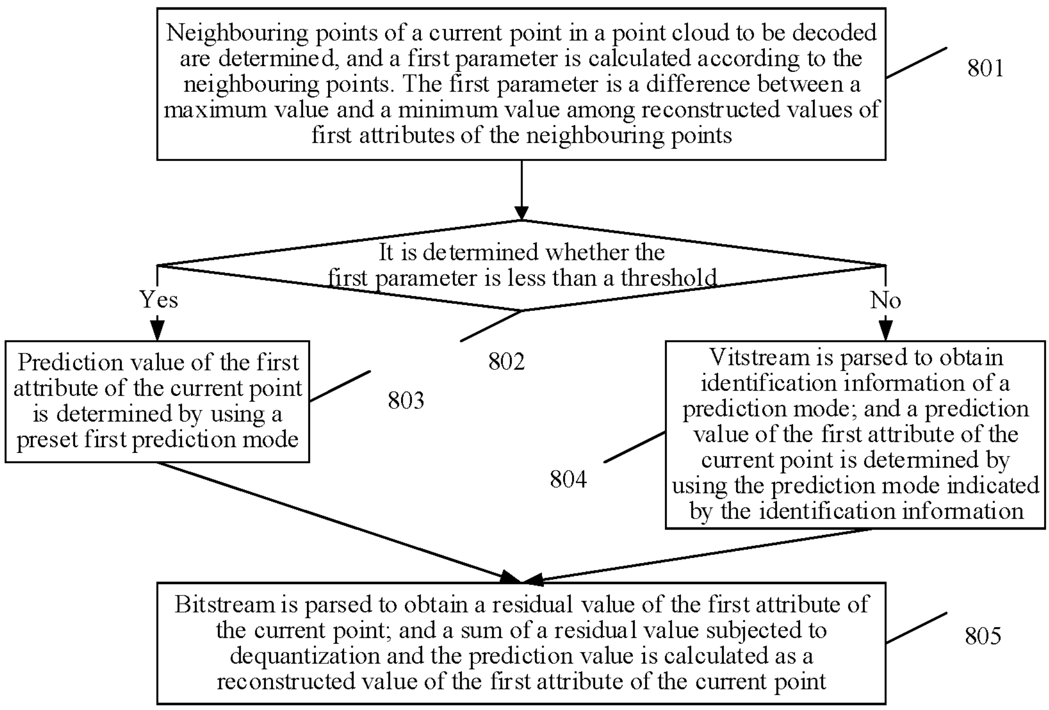
Neighbouring points of a current point in a point cloud to be decoded are determined, and a first parameter is calculated according to the neighbouring points. The first parameter is a difference between a maximum value and a minimum value among reconstructed values of first attributes of the neighbouring points
801
It is determined whether the first parameter is less than a threshold
802
Yes
No
Prediction value of the first attribute of the current point is determined by using a preset first prediction mode
803
Vitstream is parsed to obtain identification information of a prediction mode; and a prediction value of the first attribute of the current point is determined by using the prediction mode indicated by the identification information
804
Bitstream is parsed to obtain a residual value of the first attribute of the current point; and a sum of a residual value subjected to dequantization and the prediction value is calculated as a reconstructed value of the first attribute of the current point
805

FIG. 8

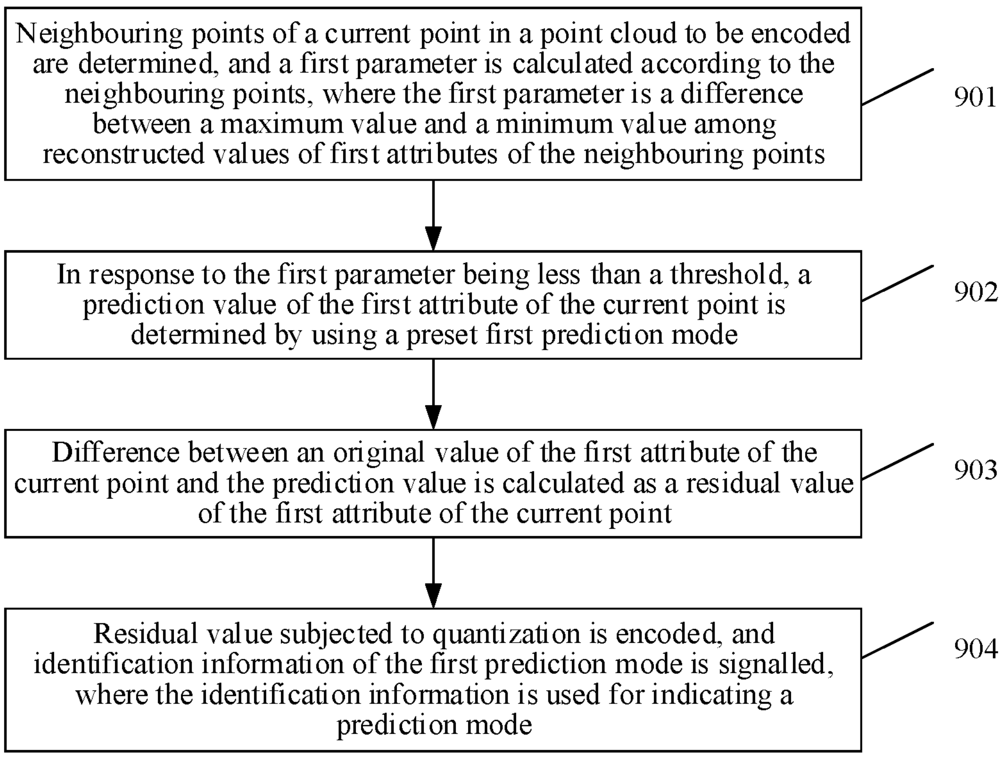
Neighbouring points of a current point in a point cloud to be encoded are determined, and a first parameter is calculated according to the neighbouring points, where the first parameter is a difference between a maximum value and a minimum value among reconstructed values of first attributes of the neighbouring points
901
In response to the first parameter being less than a threshold, a prediction value of the first attribute of the current point is determined by using a preset first prediction mode
902
Difference between an original value of the first attribute of the current point and the prediction value is calculated as a residual value of the first attribute of the current point
903
Residual value subjected to quantization is encoded, and identification information of the first prediction mode is signalled, where the identification information is used for indicating a prediction mode
904

FIG. 9

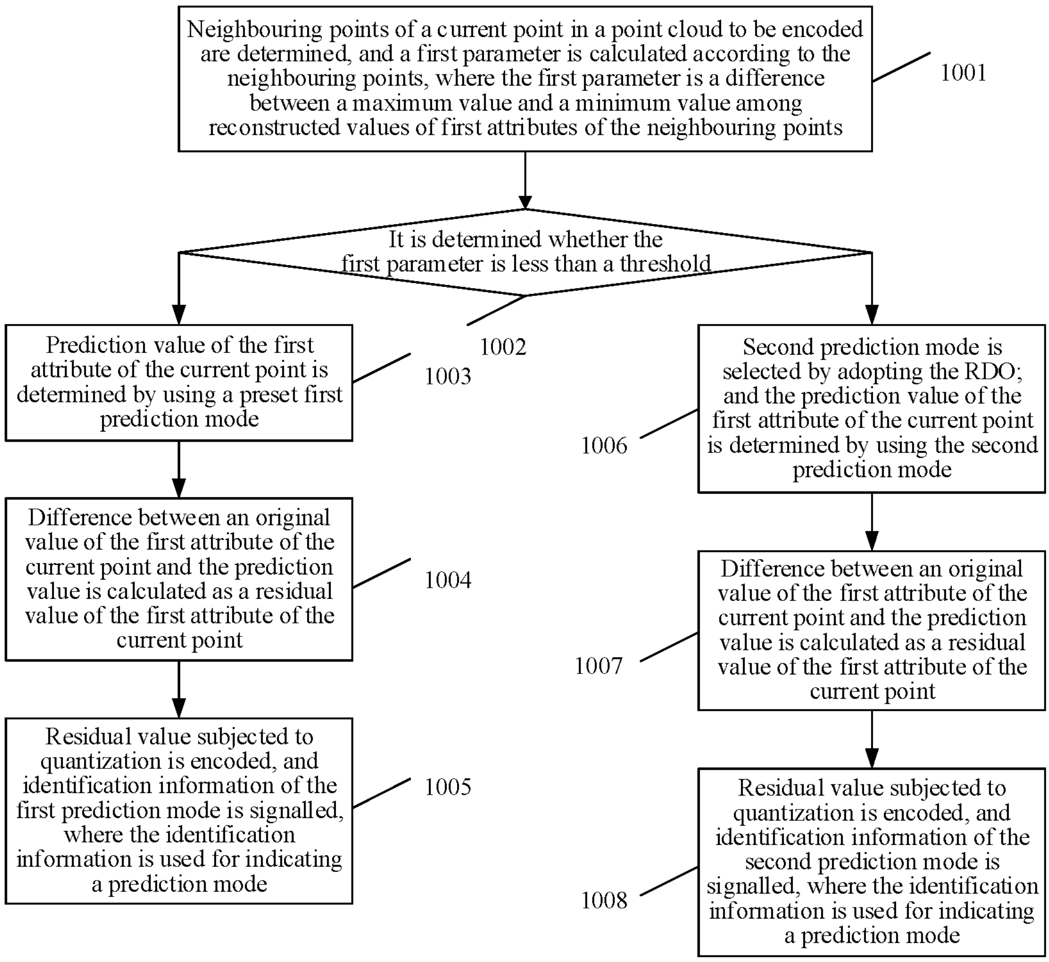
Neighbouring points of a current point in a point cloud to be encoded are determined, and a first parameter is calculated according to the neighbouring points, where the first parameter is a difference between a maximum value and a minimum value among reconstructed values of first attributes of the neighbouring points
1001
It is determined whether the first parameter is less than a threshold
1002
Prediction value of the first attribute of the current point is determined by using a preset first prediction mode
1003
Difference between an original value of the first attribute of the current point and the prediction value is calculated as a residual value of the first attribute of the current point
1004
Residual value subjected to quantization is encoded, and identification information of the first prediction mode is signalled, where the identification information is used for indicating a prediction mode
1005
Second prediction mode is selected by adopting the RDO; and the prediction value of the first attribute of the current point is determined by using the second prediction mode
1006
Difference between an original value of the first attribute of the current point and the prediction value is calculated as a residual value of the first attribute of the current point
1007
Residual value subjected to quantization is encoded, and identification information of the second prediction mode is signalled, where the identification information is used for indicating a prediction mode
1008

**FIG. 10**

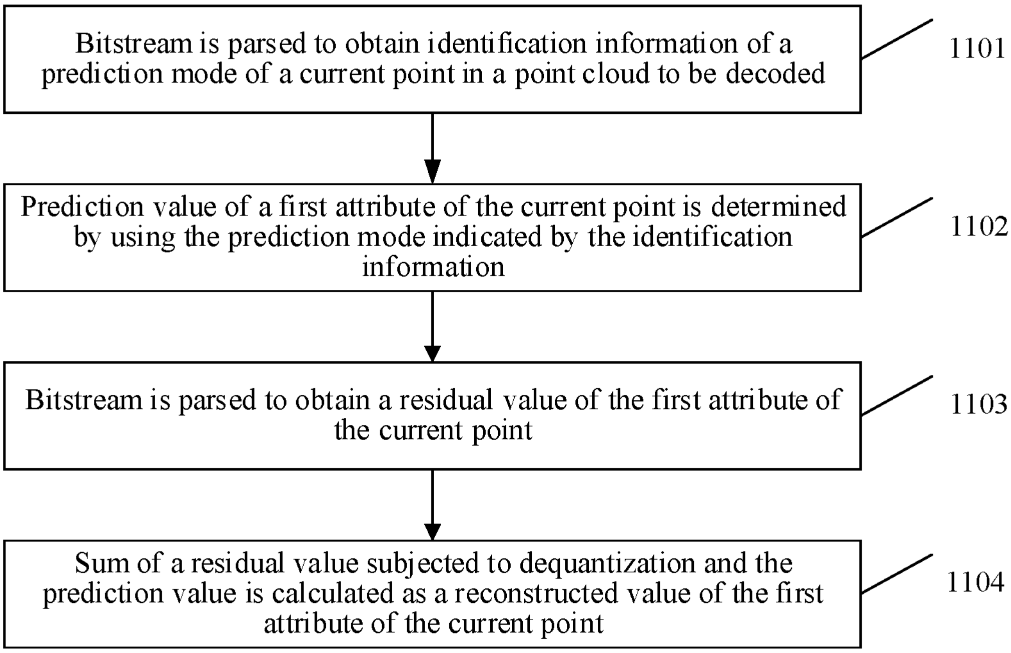
Bitstream is parsed to obtain identification information of a prediction mode of a current point in a point cloud to be decoded
1101
Prediction value of a first attribute of the current point is determined by using the prediction mode indicated by the identification information
1102
Bitstream is parsed to obtain a residual value of the first attribute of the current point
1103
Sum of a residual value subjected to dequantization and the prediction value is calculated as a reconstructed value of the first attribute of the current point
1104

**FIG. 11**

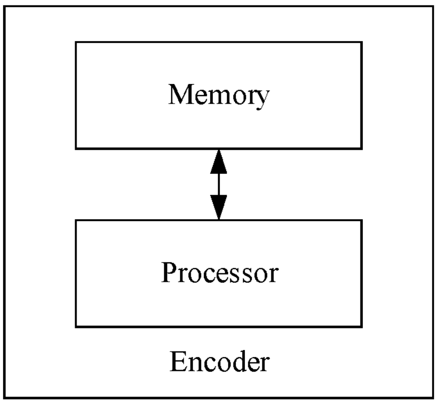
Memory
Processor
Encoder

**FIG. 12**

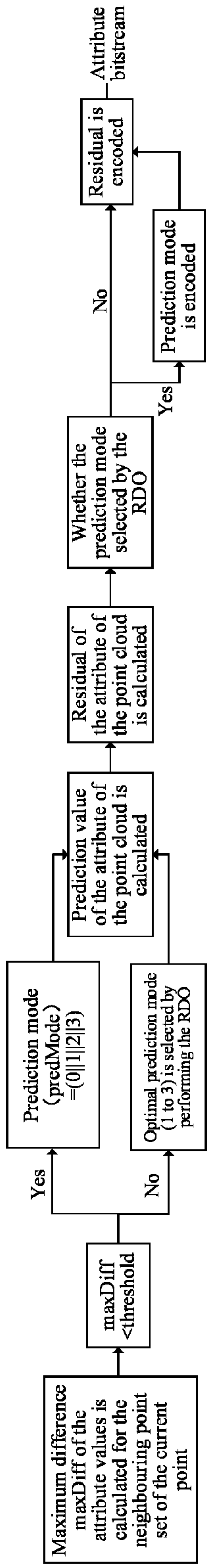
Maximum difference maxDiff of the attribute values is calculated for the neighbouring point set of the current point
maxDiff <threshold
Yes
No
Prediction mode（predMode）=(0||1||2||3)
Optimal prediction mode (1 to 3) is selected by performing the RDO
Prediction value of the attribute of the point cloud is calculated
Residual of the attribute of the point cloud is calculated
Whether the prediction mode selected by the RDO
Yes
No
Prediction mode is encoded
Residual is encoded
Attribute bitstream

FIG. 13

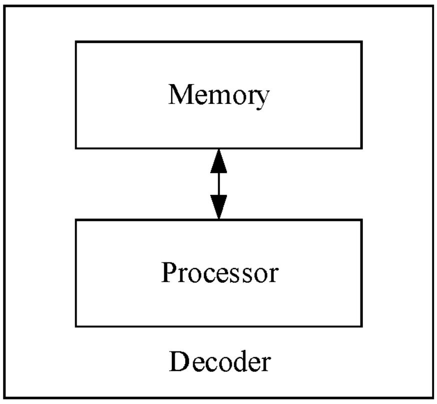


FIG. 14

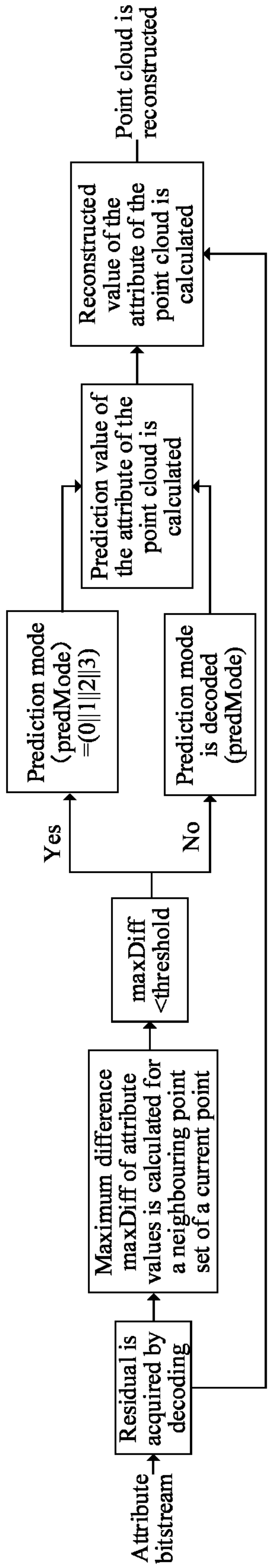
Attribute bitstream
Residual is acquired by decoding
Maximum difference maxDiff of attribute values is calculated for a neighbouring point set of a current point
maxDiff <threshold
Yes
No
Prediction mode (predMode) =(0||1||2||3)
Prediction mode is decoded (predMode)
Prediction value of the attribute of the point cloud is calculated
Reconstructed value of the attribute of the point cloud is calculated
Point cloud is reconstructed

FIG. 15

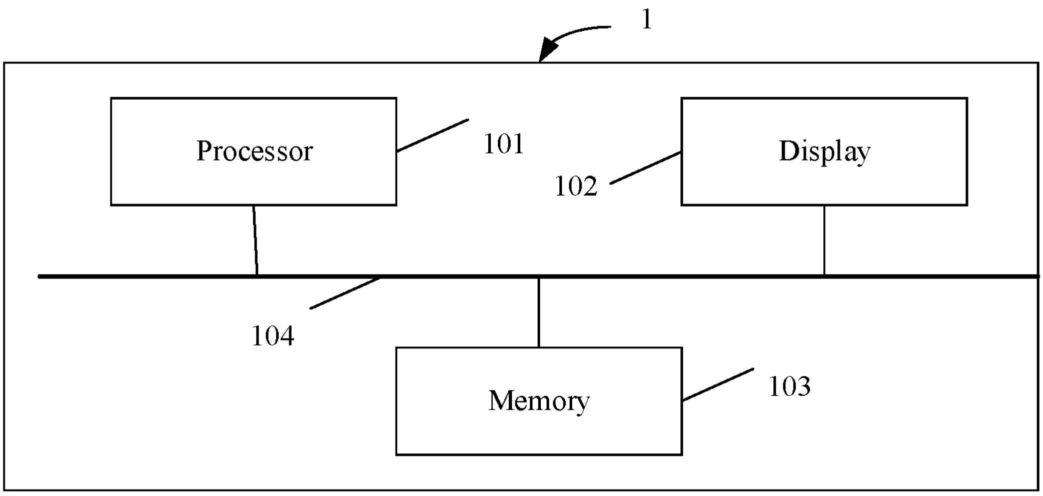


FIG. 16

## INTERNATIONAL SEARCH REPORT

International application No.
**PCT/CN2021/087918**

**A. CLASSIFICATION OF SUBJECT MATTER**

H04N 19/103(2014.01)i; H04N 19/147(2014.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI: 点云, 编码, 解码, 预测, 点, 相邻点, 近邻点, 邻近点, 平均, 最大, 最小, 差, point cloud, encode, decode, prediction, point, neighbor, average, maximum, minimum, difference

**C. DOCUMENTS CONSIDERED TO BE RELEVANT**

| Category* | Citation of document, with indication, where appropriate, of the relevant passages | Relevant to claim No. |
|---|---|---|
| X | US 2020107048 A1 (TENCENT AMERICA LLC) 02 April 2020 (2020-04-02) description, paragraphs [0023]-[0109], and figures 1-10 | 1-60 |
| X | CN 110996098 A (TENCENT AMERICA LLC) 10 April 2020 (2020-04-10) description, paragraphs [0030]-[0208], and figures 1-14 | 1-60 |
| X | CN 111095929 A (APPLE INC.) 01 May 2020 (2020-05-01) description, paragraphs [0484]-[0516] | 1-60 |
| A | CN 110418135 A (PEKING UNIVERSITY SHENZHEN GRADUATE SCHOOL) 05 November 2019 (2019-11-05) entire document | 1-60 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **08 November 2021** | **24 December 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2021/087918**

| Patent document cited in search report | | | Publication date (day/month/year) | Patent family member(s) | | | Publication date (day/month/year) |
|---|---|---|---|---|---|---|---|
| US | 2020107048 | A1 | 02 April 2020 | EP | 3776489 | A1 | 17 February 2021 |
| | | | | WO | 2020072319 | A1 | 09 April 2020 |
| | | | | CN | 112771583 | A | 07 May 2021 |
| CN | 110996098 | A | 10 April 2020 | US | 2020105025 | A1 | 02 April 2020 |
| | | | | US | 11010931 | B2 | 18 May 2021 |
| CN | 111095929 | A | 01 May 2020 | WO | 2019055772 | A1 | 21 March 2019 |
| | | | | KR | 20200039757 | A | 16 April 2020 |
| | | | | DE | 112018005149 | T5 | 10 September 2020 |
| | | | | US | 2019080483 | A1 | 14 March 2019 |
| | | | | US | 10861196 | B2 | 08 December 2020 |
| CN | 110418135 | A | 05 November 2019 | WO | 2021022621 | A1 | 11 February 2021 |
| | | | | WO | 2021023206 | A1 | 11 February 2021 |

Form PCT/ISA/210 (patent family annex) (January 2015)